# EUROPEAN PATENT APPLICATION

(11) **EP 1 792 963 A1**
(43) Date of publication of application: **06.06.2007**
(21) Application number: 05767109.1
(22) Date of filing: 01.08.2005
(51) Int. Cl.: C09K 3/18, C09D 183/04, C09D 5/00, B05D 5/00, B05D 7/24, C08L 83/04, C08K 5/5419, C03C 17/30, C03C 23/00

(54) **TREATMENT FOR FORMING WATERDROP SLIDABLE FILMS AND PROCESS FOR FORMING WATERDROP SLIDABLE FILMS**

(30) Priority: 27.08.2004 JP 2004247756; 21.02.2005 JP 2005043682; 06.04.2005 JP 2005109348; 26.04.2005 JP 2005127385
(71) Applicant: CENTRAL GLASS COMPANY, LIMITED, Ube-shi, Yamaguchi-ken 755-0001 (JP)
(72) Inventor: HAMAGUCHI, Shigeo, c/o G. R. C. of Central Glass, Mie 515-0001 (JP); Soichi KUMON, c/o G. R. C. of Central Glass, Mie 515-0001 (JP); Yoshinori AKAMATSU, c/o G. R. C. of Central Glass, Mie 515-0001 (JP); Masanori SAITO, c/o G. R. C. of Central Glass, Mie 515-0001 (JP)
(74) Representative: Manitz, Finsterwald & Partner GbR
(86) International application number: PCT/JP2005/014033
(87) International publication number: WO 2006/022118

(57) **Abstract**

The present invention relates to a treatment agent for obtaining a water slidable film, which is obtained by mixing a straight-chain polydimethylsiloxane having two or three of hydrolysable functional groups at at least one end and having 30-400 of dimethylsiloxane units (Si(CH₃)₂O), a fluoroalkylsilane having a hydrolysable functional group and having 6-12 of fluorocarbon units (CF₂ or CF₃), and a solution containing an organic solvent, an acid and water. This treatment agent is **characterized in that**, based on the total amount of the treatment agent, in terms of weight concentration, 0.2-3.0 wt% of the straight-chain polydimethylsiloxane, 0.2-2.0wt% of the fluoroalkylsilane, and 0.5-3.5wt% of the total amount of the straight-chain polydimethylsiloxane and the fluoroalkylsilane are mixed together.

## Description

### TECHNICAL FIELD

The present invention relates to a treatment agent for obtaining a water slidable film, allowing the formation of the film on a base member by drying at around room temperature, and a manufacturing method for obtaining the water slidable film. More particularly, the invention relates to a manufacturing method of a water slidable article excellent in water repellency and water droplet slidability, to be preferably used for windowpanes, side view mirrors, or the like for vehicles such as automobiles.

### BACKGROUND OF THE INVENTION

A phenomenon routinely occurs that water droplets or the like are deposited on the windowpanes or side view mirrors of vehicles or the like, causing a difficulty in running in rain. In order to resolve such a problem, means such as the formation of a film high in water repellency or water slidability on a base member such as glass have been taken. However, the life of the film is not permanent. For this reason, the case may occur where the water repellency or water slidability of the film cannot hold its initial performance during use. In such a case, it is required that a treatment agent is applied to the degraded film or to the base member from which the film has been removed to recover the function of water repellency or water slidability.

Then, in order to satisfy the function of water repellency and water slidability, and the durability, it is desirable that the treatment agent is applied to the base member, and then, heated at 100°C or more. However, when a film is formed on the windowpanes installed in vehicles or the like through a treatment at around room temperature, a necessity arises to refine the treatment agent.

Patent Document 1 discloses a surface treatment agent for vehicle glass, having a perfluoroalkyl silane, an organopolysiloxane, and the like, and indicates that the film formed by drying at room temperature with the treatment agent is excellent in water repellency and water slidability, and suppresses the occurrence of judder.

However, water repellency, water slidability, and durability of the film obtainable from such a treatment agent largely vary depending on the concentration and the reactivity of perfluoroalkyl silane and organopolysiloxane in the treatment agent. Whereas, when such a treatment agent is used, after the treatment, the functional components generating the function of water repellency, water slidability, or the like, which has not involved in the formation of the film, are dried as excess portion. Therefore, the functions of the light transmitting property, the water repellency, the water slidability, and the like of the resulting film are adversely affected thereby. Then, when the excess portion is removed by wiping off with a cloth or the like, the ease of removal depends upon the concentration and the reactivity of perfluoroalkyl silane or organopolysiloxane in the treatment agent. However, in Patent Document 1, no study has been conducted on these points.

Patent Document 2 discloses a treatment agent obtained by mixing a silicone having at an end a hydrolysable functional group and at the other end a fluoroalkyl group in a solution containing an acid, water, and the like, and indicates that the film obtainable with the treatment agent is excellent in water repellency and water slidability. However, the treatment agent disclosed in Patent Document 2 requires heating at 100°C or higher after having been applied to the base member, and hence it is not suitable for the case where a film is formed on the windowpanes installed in vehicles or the like, or the case where water repellency and water slidability of the film which has already been treated are recovered.

Further, Patent Document 3 by the present applicants discloses that by the use of a dimethylsilicone diol having a reactive group in organopolysiloxane, a chemical bond with a base member is formed, thereby to improve durability while holding water repellency and water slidability.

Water repellency, water slidability, and durability of the film obtainable with the treatment agent as described above largely vary depending on the concentration and the reactivity of the perfluoroalkyl silane or organopolysiloxane in the treatment agent. As for a windowpane, a side glass, or the like, when the article has a water slidability such that the tilt angle (which is hereinafter referred to as a fall angle) at which a water droplet of 50 µl falls is 20° or less, and preferably 15° or less, visibility during running is especially improved. Such a treatment agent as disclosed in Patent Document 1 has advantages of easy formation of the film, and the like. However, the functionalities such as water repellency and water slidability of the film and the durability of the film are in a relationship of tradeoff. Therefore, it is not easy to achieve a film satisfying both of them.

On the other hand, as a method for improving the durability of the water repellent film, the following procedure is disclosed: an undercoat film of tetraisocyanate silane is formed on a glass substrate, and a coating solution including an alkoxy silane type water repellent having one or more side chains having a fluorocarbon group is applied thereon, so that a water repellent article excellent in durability can be obtained (Patent Document 4 by the present applicants).

Patent Document 5 discloses as follows: on the surface of a base member such as glass, ceramic, plastic, metal or the like, an undercoat film obtained by drying an underlayer treatment solution prepared by dissolving a substance having a chlorosilyl group in the molecule in an alcohol type solvent for reaction, i.e., a primer layer is formed, and a water repellent, oil repellent, hydrophilic, anti-fogging, or other functional thin film is formed on the primer layer; as a result, the functional thin film is firmly bonded to the base member via the primer layer.

In the document, within 30 minutes immediately after mixing of the substance having a chlorosilyl group in the molecule and the alcohol type solvent, the application to the base member is carried out, thereby trying a more efficient formation of silanol groups in the primer layer.
Patent Document 1: JP-A-2-233535
Patent Document 2: JP-A-2000-144056 (U.S. Pat. 6,403,225)
Patent Document 3: JP-A-2001-026463
Patent Document 4: JP-A-9-194237
Patent Document 5: WO1998/40323

### SUMMARY OF THE INVENTION

A first task of the invention is to provide a treatment agent whereby a film excellent in water repellency, water slidability, and durability can be formed by the application of the treatment agent even without carrying out a heating step, for example, as in the case where a film can subsequently be fitted to the windows or the like of existing vehicles, and the removal of an excess dried-product resulting from the functional components generating the functions such as water repellency and water slidability, which have not involved in the formation of the film, after the treatment, is easy.
Further, a second task of the invention is to provide a manufacturing method of a water slidable article, capable of providing a water slidable article which has such water slidability as to reduce the detriment to the visibility through the article even in an environment in which the article is in contact with water when the water slidable article is applied to the windowpanes, side glasses, and the like of vehicles, and which is excellent in muddy water abrasion resistance and light resistance.
The object of the invention is to solve at least one of the first and second tasks.
According to a first feature of the present invention, there is provided a treatment agent of the present invention for obtaining a water slidable film, which is obtained by mixing a straight-chain polydimethylsiloxane having two or three of hydrolysable functional groups at at least one end and having 30-400 of dimethylsiloxane units (Si(CH₃)₂O), a fluoroalkylsilane having a hydrolysable functional group and having 6-12 of fluorocarbon units (CF₂ or CF₃), and a solution containing an organic solvent, an acid and water. This treatment agent is characterized in that, based on the total amount of the treatment agent, in terms of weight concentration, 0.2-3.0 wt% of the straight-chain polydimethylsiloxane, 0.2-2.0wt% of the fluoroalkylsilane, and 0.5-3.5wt% of the total amount of the straight-chain polydimethylsiloxane and the fluoroalkylsilane are mixed together. (Hereinafter, in the present description, in the case of indicating both of the straight-chain polydimethylsiloxane and the fluoroalkylsilane, it is expressed as "functional components". Furthermore, in the case of indicating the total amount of the straight-chain polydimethylsiloxane and the fluoroalkylsilane, it is expressed as "the total amount of the functional components".)
According to a second feature of the present invention, there is provided a manufacturing method of a water slidable article in which a water slidable film is formed on a base member. This method is characterized in that it comprises the step of applying a solution, to which a silicon compound having four functional groups has been added, to a base member, thereby bonding the silicon compound to the base member and forming a primer layer in which silanol groups derived from the silicon compound have been formed, and the step of applying to the primer layer a treatment agent obtained by mixing a solution containing a straight-chain polydimethylsiloxane having at least two of hydrolysable groups at only one end and being 20-50 (1.3-1.7 in common logarithm) in average number of repeating units of dimethylsiloxane units (Si(CH₃)₂O), a fluoroalkylsilane having a hydrolysable functional group and being 1-12 in the number of fluorocarbon units (CF₂ or CF₃), an organic solvent, an acid and water for solidification, thereby forming a water slidable film. The first and second tasks are solved by the first and second features of the invention, respectively. The first and second features of the invention may be combined together. In such a case, in order to form a water slidable film, a treatment agent according to the first feature may be used in the method for manufacturing a water slidable article according to the second feature.

### BRIEF DESCRIPTION OF THE DRAWINGS

[FIG. 1] A diagram showing the preparation procedure of a treatment agent in Example 1 according to the first feature of the present invention.
[FIG. 2] A diagram showing the preparation procedure and the mixing ratio (weight ratio) of respective chemical solutions of a treatment agent in Example 1 according to the second feature of the invention.

### DETAILED DESCRIPTION

In the following, the first and second features of the present invention will be described in details in this order. First, the first feature of the invention will be described in details. For simplification, it is omitted that each is specified as the first feature.

The straight-chain polydimethylsiloxane has a dimethylsiloxane chain excellent in water slidability, and hence improves the water slidability of the resulting film. On the other hand, the fluoroalkylsilane has a fluoroalkyl chain excellent in durability, and hence improves the durability of the resulting film.

The straight-chain polydimethylsiloxane has 2 or 3 hydrolysable functional groups at at least one end, and the fluoroalkylsilane also has a hydrolysable functional group. The hydrolysable functional group is hydrolyzed by the acid and water contained in the treatment agent to form silanol groups high in reactivity. As a result, when the treatment agent is applied to a base member, the base member surface and the silanol groups react with other. Accordingly, the straight-chain polydimethylsiloxane and the fluoroalkylsilane are firmly bonded to the base member. As a result, the durability of the resulting water slidable film is improved.

Further, the acid and water have an effect of hydrolyzing the hydrolysable functional groups of the straight-chain polydimethylsiloxane and of the fluoroalkylsilane, and forming silanol groups bondable to the base member.

Still further, a treatment method for obtaining a water slidable film of the present invention is characterized by including a step of applying a treatment agent to a base member, a step of drying the base member on which the treatment agent has been applied, and a step of removing the unreacted or hydrolyzed or condensed functional components (which are hereinafter referred to as "excess portion") in the isolated state after drying, which have not involved in the film formation.

The treatment agent for obtaining the water slidable film of the invention shows excellent water repellency, water slidability, and durability by the treatment of the base member and then drying. For this reason, it is the most suitable as a treatment agent for treating the base member on which a heat treatment cannot be carried out, such as windowpanes and side view mirrors installed in vehicles or the like. Further, the removal of the excess portion after the treatment is easy, resulting in a small working load.

It is important that the straight-chain polydimethylsiloxane for use in the treatment agent of the invention has 30 to 400 dimethylsiloxane units (Si(CH)₃)₂O).

When the number of dimethylsiloxane units of the straight-chain polydimethylsiloxane exceeds 400, the number of hydrolysable functional groups of the straight-chain polydimethylsiloxane decreases relative to dimethylsiloxane units, resulting in a reduction of reactivity of polydimethylsiloxane. As a result, the resulting film is weakened in bonding with the base member, resulting in reductions of the light resistance and the muddy water abrasion resistance of the film. As a result, the degradation of the resulting water slidable film is accelerated.

The base member having a water slidable film manufactured by the use of the treatment agent of the invention is often used outdoors, and often exposed to sunlight. Thus, dust is often deposited thereon, so that the base member undergoes muddy water abrasion upon wiping by a cloth or a wiper for cleaning. The formation of a film excellent in light resistance and muddy water abrasion resistance is very important from the viewpoint of practical use, and particularly important for forming a film on the windowpane of a vehicle.

On the other hand, when the treatment agent of the invention is applied to the base member, the hydrolysable functional groups of the functional components in the treatment agent and the reactive groups such as a hydroxyl group typified by a silanol group present on the base member surface react and bond with each other, so that the functional components are fixed to the base member. Therefore, the reduction of the number of the units results in the reduction of the number of dimethylsiloxane units to be fixed on the base member. As a result of the study in the invention, it has been proved that the muddy water abrasion resistance of the resulting film is influenced by the number of the units. Then, when the number of the units is set at 30 or more, these characteristics are remarkably improved, which is effective for long-term use of the resulting film.

Further, it is important that the straight-chain polydimethylsiloxane has 2 or 3 hydrolysable functional groups at at least one end. When the number of the hydrolysable functional groups at both ends is 1 or less, the reactivity of the polydimethylsiloxane largely reduces, resulting in a weak bond with the base member. This reduces the light resistance of the resulting water slidable film, so that the deterioration of the film is unfavorably accelerated.

Still further, it is important that the straight-chain polydimethylsiloxane is mixed in an amount of 0.2 to 3.0 wt% based on the total amount of the treatment agent. In general, as a water repellent, perfluoroalkyl silane is used as the functional component. However, this is low in water slidability, and the minimum tilt angle (which is hereinafter referred to as a fall angle) at which 50 µl of a water droplet can slide is also as large as 25 to 27°.

In the actual use of the water slidable film, it is bodily sensed that the slidability or the scatterability of a water droplet from the film differs at the fall angle, which serves as an index of the water slidability, of around 20°. This is then remarkably bodily sensed when the water slidable film is used for the windows of a vehicle.

Then, when the straight-chain polydimethylsiloxane is in an amount of less than 0.2 wt% based on the total amount of the treatment agent, the fall angle of the resulting film exceeds 20°, resulting in a low water slidability of the film.

The treatment agent is applied to the base member, and dried. Then, the excess portion remains in the form of a dried product on the base member. When the concentration of the straight-chain polydimethylsiloxane exceeds 3.0 wt% based on the total amount of the treatment agent, the amount of the dried product increases during the film formation, which imposes a load on the removing step, resulting in a time-consuming step. The long hour wiping increases the possibility of abrasion of the film, and increases the risk of adversely affecting the water slidability, the durability, and the like.

Further, in view of the use environment of the treatment agent, this removing step is often carried out through wiping by manual work. Therefore, when the time (load) of the removing step is much, the dried product resultingly may not be removed totally and may often remains on the film. When the excess portion remains, water droplets are caught on the excess portion, and hence cannot smoothly move, resulting in the reduction of the water slidability. Further, the excess portion remains in white spots on the film surface, thereby causing the reduction of the light transmitting property of the film.

A study on the removing step was conducted by applying the treatment agent to the front window of an ordinary passenger car, and drying it, and then carrying out wiping by manual work using a paper towel, a cloth, a wiper, or the like. As a result, it has been proved that considerable fatigue is bodily sensed, and the removal of the excess portion cannot be carried out sufficiently when the time of the removing step exceeds 6 minutes.

Then, the study indicated the following; when the concentration of the straight-chain polydimethylsiloxane based on the total amount of the treatment agent is 3.0 wt% or less, it is possible to produce a treatment agent which has taken the foregoing points into consideration. Further, the removing step preferably takes a shorter time, and specifically more preferably 3 minutes or shorter. In consideration of this point, the straight-chain polydimethylsiloxane is preferably in an amount of 2.5 wt% or less based on the total amount of the treatment agent.

As the straight-chain polydimethylsiloxane, polydimethylsiloxane represented by the following general formula [1] is preferably used: 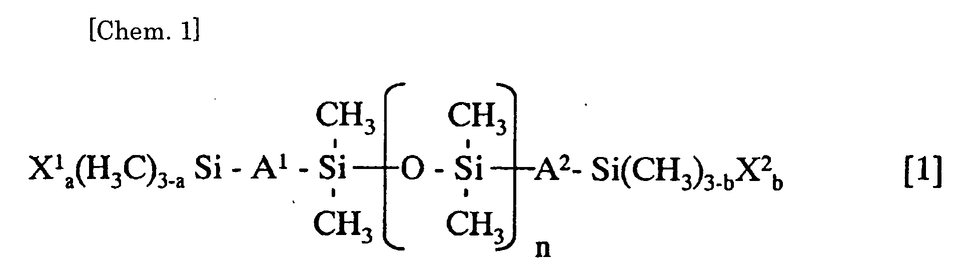 where X¹ and X² are each monovalent hydrolysable functional groups; A¹ and A² are each divalent hydrocarbon groups, -(CH₂)ᵢ-NH-CO-O- group ([i] is an integer of 0 to 9), or oxygen. [n] is an integer of 30 to 400, and denotes the number of dimethylsiloxane units. [a] or [b] are each integers of 0 to 3, and at least one of [a] or [b] must be 2 or 3.

A¹ and A² of polydimethylsiloxane represented by the general formula [1] are each moieties for linking a hydrolysable functional group and a dimethylsiloxane chain exhibiting water repellency and water slidability. Therefore, when stability of this moiety is reduced, the dimethylsiloxane chain becomes more likely to fall from the water slidable film, resulting in the reduction of durability of the film. This indicates that A¹ and A² of polydimethylsiloxane represented by the general formula [1] are each preferably divalent hydrocarbon groups or oxygens, which are excellent in stability.

As the fluoroalkylsilane for use in the treatment agent of the invention, the one having a hydrolysable functional group, and further, having a perfluoroalkyl group (CF₃(CF₂)ₜ₋₁-) or a perfluoroalkylene group (-(CF₂)ᵤ-) having 6 to 12 fluorocarbon units (CF₂ or CF₃) in the molecule is used. An increase in number of fluorocarbon units (CF₂ or CF₃) results in an increase in light resistance and muddy water abrasion resistance of the resulting water slidable film. Herein, the t and u each denote integers.

However, when the number of fluorocarbon units increases, the freezing point of the fluoroalkylsilane increases to a temperature higher than ordinary temperature. Therefore, the functional components become likely to solidify, so that the application becomes difficult. In addition, when the fluoroalkylsilane becomes an excess portion, this becomes more firmly fixed to the base member surface, resulting in an increase in load required for removing the excess portion.

Therefore, it is important that the number of fluorocarbon units is set to be 6 to 12, in order to improve light resistance and muddy water abrasion resistance of the resulting film, and to facilitate the application of the treatment agent and further facilitate the excess portion after drying, and to set the time required for the removal of the excess portion on the front widow of an ordinary passenger car at 6 minutes or less,.

Further, it is important that the amount of the fluoroalkylsilane to be mixed is set at 0.2 to 2.0 wt% based on the total amount of the treatment agent. When the amount is less than 0.2 wt%, light resistance and muddy water abrasion resistance are extremely lowered. When it exceeds 2.0 wt%, water slidability is greatly lowered, and the fall angle exceeds 20°. In order to obtain a higher water slidability (fall angle; 18° or less) and durability, the mixing amount is preferably set to be 0.5 to 1.6 wt% in terms of the weight concentration.

As the fluoroalkylsilane, a fluoroalkylsilane having a hydrolysable functional groups at the end of one side and represented by the following general formula [2], or a fluoroalkylsilane having hydrolysable functional groups at both ends on both sides and represented by the following general formula [3] is preferably used.

[Chem. 2] CF₃(CF₂)ₘ₋₁CH₂CH₂Si(CH₃)₃₋ₚY¹ₚ [2]

where Y¹ is a monovalent hydrolysable functional group. Further, [m] is an integer of 6 to 12, and denotes the number of fluorocarbon units (CF₂ or CF₃). Further, [p] denotes an integer of 1 to 3, and denotes the number of hydrolysable functional groups.

[Chem. 3] **Y²_{q}(CH₃)_{3-q}SiCH₂CH₂(CF₂)ₘCH₂CH₂Si(CH₃)₃₋ᵣY³ᵣ** [3]

where Y² and Y³ are each monovalent hydrolysable functional groups. Further, [m] is an integer of 6 to 12, and denotes the number of fluorocarbon units. Further, [q] and [r] each denote integers of 1 to 3.

As the above fluoroalkylsilane, it is possible to use CF₃(CF₂)₁₁CH₂CH₂Si(OCH₃)₃, CF₃(CF₂)₁₁CH₂CH₂SiCH₃(OCH₃)₂, CF₃(CF₂)₁₁CH₂CH₂Si(CH₃)₂OCH₃, CF₃(CF₂)₉CH₂CH₂Si(OCH₃)₃, CF₃(CF₂)₉CH₂CH₂SiCH₃(OCH₃)₂, CF₃(CF₂)₉CH₂CH₂Si(CH₃)OCH₃, CF₃(C)₇CH₂CH₂Si(OCH₃)₃, CF₃(CF₂)₇CH₂CH₂SiCH₃(OCH₃)₂, CF₃(CF₂)₇CH₂CH₂Si(CH₃)₂OCH₃, CF₃(CF₂)₅CH₂CH₂Si(OCH₃)₃, CF₃(CF₂)₅CH₂CH₂SiCH₃(OCH₃)₂, CF₃(CF₂)₅CH₂CH₂Si(CH₃)₂OCH₃, CF₃(CF₂)₁₁CH₂CH₂SiCl₃, CF₃(CF₂)₁₁CH₂CH₂SiCH₃Cl₂, CF₃(CF₂)₁₁CH₂CH₂Si(CH₃)₂Cl, CF₃(CF₂)₉CH₂CH₂SiCl₃, CF₃(CF₂)₉CH₂CH₂SiCH₃Cl₂, CF₃(CF₂)₉CH₂CH₂Si(CH₃)₂Cl, CF₃(CF₂)₇CH₂CH₂SiCl₃, CF₃(CF₂)₇CH₂CH₂SiCH₃Cl₂, CF₃(CF₂)₇CH₂CH₂Si(CH₃)₂Cl, CF₃(CF₂)₅CH₂CH₂SiCl₃, CF₃(CF₂)₅CH₂CH₂SiCH₃Cl₂, CF₃(CF₂)₅CH₂CH₂Si(CH₃)₂Cl and the like, as a fluoroalkylsilane having a hydrolysable functional group at the end of one side. Furthermore, as a fluoroalkylsilane having hydrolysable groups at the ends of both sides, it is possible to use (CH₃O)₃SiCH₂CH₂(CF₂)₁₂CH₂CH₂Si(OCH₃)₃, (CH₃O)₂CH₃SiCH₂CH₂(CF₂)₁₂CH₂CH₂SiCH₃(OCH₃)₂, CH₃O(CH₃)₂SiCH₂CH₂(CF₂)₁₂CH₂CH₂Si(CH₃)₂OCH₃, (CH₃O)₃SiCH₂CH₂(CF₂)₁₀CH₂CH₂Si(OCH₃)₃, (CH₃O)₂CH₂SiCH₂CH₂(CF₂)₁₀CH₂CH₂SiCH₃(OCH₃)₂, CH₃O(CH₃)₂SiCH₂CH₂(CF₂)₁₀CH₂CH₂Si(CH₃)₂OCH₃, (CH₃O)₃SiCH₂CH₂(CF₂)₈CH₂CH₂Si(OCH₃)₃, (CH₃O)₂CH₃SiCH₂CH₂(CF₂)₈CH₂CH₂SiCH₃(OCH₃)₂, CH₃O(CH₃)₂SiCH₂CH₂(CF₂)₈CH₂CH₂Si(CH₃)₂OCH₃, (CH₃O)₃SiCH₂CH₂(CF₂)₆CH₂CH₂Si(OCH₃)₃, (CH₃O)₂CH₃SiCH₂CH₂(CF₂)₆CH₂CH₂SiCH₃(OCH₃)₂, CH₃O(CH₃)₂SiCH₂CH₂(CF₂)₆CH₂CH₂Si(CH₃)₂OCH₃, Cl₃SiCH₂CH₂(CF₂)₁₂CH₂CH₂SiCl₃, Cl₂CH₃SiCH₂CH₂(CF₂)₁₂CH₂CH₂SiCH₃Cl₂, Cl(CH₃)₂SiCH₂CH₂(CF₂)₁₂CH₂CH₂Si(CH₃)₂Cl, Cl₃SiCH₂CH₂(CF₂)₁₀CH₂CH₂SiCl₃, Cl₂CH₃SiCH₂CH₂(CF₂)₁₀CH₂CH₂SiCH₃Cl₂, Cl(CH₃)₂SiCH₂CH₂(CF₂)₁₀CH₂CH₂Si(CH₃)₂Cl, Cl₃SiCH₂CH₂(CF₂)₈CH₂CH₂SiCl₃, Cl₂CH₃SiCH₂CH₂(CF₂)₈CH₂CH₂SiCH₃Cl₂, Cl(CH₃)₂SiCH₂CH₂(CF₂)₈CH₂CH₂Si(CH₃)₂Cl, Cl₃SiCH₂CH₂(CF₂)₆CH₂CH₂SiCl₃, Cl₂CH₃SiCH₂CH₂(CF₂)₆CH₂CH₂SiCH₃Cl₂, Cl(CH₃)₂SiCH₂CH₂(CF₂)₆CH₂CH₂Si(CH₃)₂Cl, and the like.

However, for a fluoroalkylsilane having hydrolysable functional groups at the ends of both sides, condensation tends to proceed because it has hydrolysable functional groups at the ends of both sides. For this reason, the application of the treatment agent tends to become difficult. Further, when it becomes an excess portion, it tends to be a condensed excess portion, and hence, the excess portion is firmly fixed to the base member, and the removal of the excess portion after drying becomes difficult. In view of this respect, a fluoroalkylsilane having a hydrolysable functional group only at the end of one side is preferable.

As a hydrolysable functional group in the functional components, it is possible to use an alkoxy group such as methoxy group, ethoxy group, propoxy group, isopropoxy group or butoxy group, a chloro group or an isocyanate group, or the like. However, when the reactivity of the hydrolysable functional group is too high, not only handling in the preparation of the treatment agent becomes difficult, but also the pot life of the treatment agent is shortened. On the other hand, when the reactivity is too low, the hydrolysis reaction does not proceed sufficiently, and the amount of the resulting silanol groups does not become sufficient. Therefore, bond between the base member and the resulting water slidable film does not become sufficient, resulting in the reduction of durability of the film. In view of the ease of handling, the pot life of the treatment agent, and the durability of the resulting water slidable film, the hydrolysable functional group is preferably an alkoxy group. Above all, methoxy group and ethoxy group are particularly preferable.

It is important that the total amount of the functional components is mixed in a weight concentration of 0.5 to 3.5 wt% based on the total amount of the treatment agent. When it is less than 0.5 wt%, the light resistance and the muddy water abrasion resistance of the resulting film are lowered. On the other hand, when the amount exceeds 3.5 wt%, the removability of the excess portion is lowered. Accordingly, in the step of applying the treatment agent, and removing the excess portion after drying, the wiping time by manual work using a paper towel, a cloth, a wiper, or the like exceeds 6 minutes for the front window of an ordinary passenger car. Thus, it is preferably set at 0.8 to 3.0 wt% in order to make the durability of the film higher, and to facilitate the removal of the excess portion after the application and drying of the treatment agent.

It suffices that the polydimethylsiloxane has 2 or 3 hydrolysable functional groups at at lest one end. As such, it is possible to use the one having hydrolysable functional groups only at the end of one side, or the one having hydrolysable functional groups at the ends of both sides. For the one having reactive groups only at the end of one side, the other end thereof is an alkyl group high in hydrophobicity, and hence the improvement of the falling property can be more expected. Further, the number of resulting silanol groups is small, and the reactivity is low. For this reason, the condensed excess portion is less generated, and as a result, the dried products to be firmly fixed to the film are less generated. Accordingly, the removal of the excess portion after the application and the drying tends to become easy, but the reaction with the base member becomes less likely to occur. Therefore, when the one having hydrolysable functional groups only at the end of one side is used, it is preferable to increase the amounts of the polydimethylsiloxane and the fluoroalkylsilane in the treatment agent. Specifically, based on the total amount of the treatment agent, the mixing amounts are preferably set in terms of the weight concentration at 0.5 to 2.5 wt% for the straight-chain polydimethylsiloxane, 0.6 to 1.6 wt% for the fluoroalkylsilane, and further, 1.2 to 3.0 wt% for the total amount of the functional components.

On the other hand, the one having hydrolysable functional groups at the ends of both sides is high in reactivity. For this reason, it tends to firmly bond to the base member. As a result, a water slidable film excellent in durability is obtained. However, a condensed excess portion tends to be generated, and hence the removability of the excess portion after the application/ drying of the treatment agent tends to be deteriorated. Therefore, when the one having hydrolysable functional groups at the ends of both sides is used, it is preferable to decrease the amounts of the polydimethylsiloxane and the fluoroalkylsilane in the treatment agent. Specifically, based on the total amount of the treatment agent, it is preferable to set the mixing amounts in terms of the weight concentration at 0.2 to 2.0 wt% for the straight-chain polydimethylsiloxane, 0.5 to 1.4 wt% for the fluoroalkylsilane, and further, 0.8 to 2.5 wt% for the total amount of the functional components.

As the solvent for use in the treatment agent, it is possible to use an organic solvent for dissolving other components (the straight-chain polydimethylsiloxane, the fluoroalkylsilane, water, and the acid). As these, it is preferable to use lower alcohols such as ethyl alcohol and isopropyl alcohol, ketones such as methyl ethyl ketone and methyl isobutyl ketone, esters such as ethyl acetate and butyl acetate, hydrocarbon solvents such as hexane, toluene, benzene, and xylene, ethers such as diethyl ether and diisopropyl ether, and mixtures thereof. Above all, mixed solvents of one or more solvents selected from methyl ethyl ketone, ethyl acetate, hexane, diethyl ether and diisopropyl ether and a lower alcohol such as ethyl alcohol or isopropyl alcohol are particularly preferable, because they are high in solubility for the straight-chain polydimethylsiloxane, the fluoroalkylsilane, water, and the acid, and further make proper the applicability (ease of application) of the treatment agent, and the drying time (working time) of the treatment agent.

The water for use in the treatment agent of the invention is preferably set at one time to 100 times, in terms of the number of molecules, the number of the hydrolysable functional groups possessed by the straight-chain polydimethylsiloxane and the fluoroalkyl silane. At less than one time, the hydrolysis reaction does not proceed, so that silanol groups are less likely to be formed sufficiently. This unfavorably results in the reduction of the durability of the resulting water slidable film. At more than 100 times, the straight-chain polydimethylsiloxane, the fluoroalkylsilane, and water unfavorably become less likely to be dissolved uniformly in the treatment agent. Further, the increase in the amount of water results in the increase in reaction rate. As a result, the pot life of the treatment agent is shortened. Therefore, in view of the pot life, 50 times or less are more preferable.

Further, the acid for use in the treatment agent carries out a catalytic function to accelerate the hydrolysis reaction of the functional components. Nitric acid, hydrochloric acid, acetic acid, sulfuric acid, or other organic acids, and the like can be used. Then, it is mixed so that the pH value in a form mixed with water becomes 0 to 5, preferably 0 to 2.

Next, a description will be given to a preferred preparation method of a treatment agent for obtaining a water slidable film. The treatment agent for obtaining a water slidable film can be obtained in the following manner. To a mixture of the straight-chain polydimethylsiloxane, the fluoroalkylsilane, and a solvent, water and an acid for effecting the hydrolysis reaction are added and mixed. Thus, the straight-chain polydimethylsiloxane and the fluoroalkylsilane are hydrolyzed. Herein, the reason why the straight-chain polydimethylsiloxane and the fluoroalkylsilane are previously mixed is for homogeneously mixing the both components in the treatment agent. However, acid, water, the straight-chain polydimethylsiloxane, and the fluoroalkylsilane may also be mixed at the same time.

Then, a description will be given to a method for obtaining a water slidable film using the resulting treatment agent.

As application methods for applying the coating solution obtained as described above to the base member surface, various film forming methods such as hand coating, a nozzle flow coating method, a dipping method, a spraying method, a reverse coating method, a flexography, a printing method, a flow coating method, and a spin coating method, and combinations thereof are appropriately adoptable.

The base member that is coated with the treatment agent has no particular restriction. For example, in the case of a glass base member, it is possible to use an inorganic transparent glass plate such as a float glass plate commonly used for windowpanes for buildings, or mirrors, or soda-lime glass manufactured by a roll-out method. For the glass plates, both colorless ones and colored ones are usable, and there is no particular restriction on the combination with other functional films, the form of glass, and the like. Naturally, a flat glass plate and a bent glass plate, other than various tempered glasses such as air-quenching tempered glass and chemically tempered glass, and wire glass are also usable. Further, various glass base members such as borosilicate glass, low expansion glass, zero expansion glass, low expansion crystallized glass, and zero expansion crystallized glass are usable.

In the first and second features of the invention, the glass base member may be used in the form of a single plate, and may also be used in the form of a multilayered glass, a laminated glass, or the like. Further, it is acceptable that the film is formed on either one side or both sides of the base member, or on the entire surface of the base member, or on a part thereof.

A film resulting from the treatment agent of the invention is excellent in visible light transmittance. However, it may be used even for applications not requiring the visible light transmittance. In such a case, a base member of ceramics, metal, or the like may be used.

Further, the treatment agent of the invention does not particularly require heating, and hence, polycarbonate, polyethylene terephthalate, polymethyl methacrylate, polyethylene, polyvinyl chloride, and other plastic base members can be used.

Further, a solution to which a silicon compound having 4 functional groups has been added is applied to the base member, and solidified, thereby to form a primer layer derived from the silicon compound thereon. The resulting material may be used for the base member. For the primer layer, the bonding sites with the film, i.e., the number of silanol groups, can be made larger than that of the base member itself. Thus, for the water slidable film formed by using the base member including the primer layer formed thereon, a further improvement of the durability can be expected. Then, the primer layer may also be formed in a monomolecular layer.

As the silicon compound having 4 functional groups, tetraisocyanate silane, silane tetrahalide, tetramethoxysilane, tetraethoxysilane, or the like may be used. Then, the chemical species is added to a solvent to prepare a solution to be applied to the base member surface. As the solvent, alcohols, for example, lower alcohols such as methyl alcohol, ethyl alcohol, propyl alcohol, and isopropyl alcohol, or common organic solvents of paraffinic hydrocarbons or aromatic hydrocarbons, for example, n-hexane, toluene, or chlorobenzene, or mixtures thereof are usable.

In order to adjust the pH of the solution to 0 to 5, an acid such as hydrochloric acid, nitric acid, or acetic acid may be introduced. In order to accelerate the hydrolysis reaction of the chemical species, a small amount of water may be introduced. In order to efficiently form the primer layer, it is preferable to prepare the solution by adding the chemical species of 0.5 wt% to 2 wt%, preferably 0.7 wt% to 1.5 wt%, and more preferably 0.9 wt% to 1.2 wt%.

As a method for applying the coating solution to a glass base member surface, it is possible to use a known means such as spray coating method, bar coating method, roll coating method, spin coating method, brush coating, or dip coating method. Then, in view of the ease of forming the primer layer, the ease of preparation of the solution, the number of silanol groups formed, and the like, it is preferable to use tetraisocyanate silane as the chemical species.

In order to enhance adhesion with the base member, a baking may be conducted at 50°C to 350°C, preferably at 100°C to 300°C, after the solution has been applied to the base member. Then, immediately after the formation of the primer layer, the treatment agent of the invention may be applied to form a water slidable film. In case that the treatment agent of the invention is applied to the base member after the base member having the primer layer formed thereon has been subjected to storage, distribution and the like, the silanol groups on the primer layer may be destroyed or deactivated under the influences of the organic substances, moisture present in the air, and the like. Therefore, it is preferable to reactivate the silanol groups through the contact of an acidic solution with the deactivated primer layer, ultraviolet irradiation, or the like to render the primer layer in the active state again.

Then, a description will be given to a treatment after the application of the treatment agent to the base member. By drying after applying the treatment agent to the base member, the polydimethylsiloxane and the fluoroalkylsilane are bonded to the base member. The drying means may be air drying. It suffices that a standing still is conducted in an environment of room temperature, for example, 15°C to 30°C, and a relative humidity of 30 % to 60 % for 5 minutes to 20 minutes. In order to shorten the drying time, hot air may be blown by a general-purpose dryer or the like. Heating may be carried out at 80°C to 250°C so long as the environment is capable of heating the base member.

Finally, the excess portion remains in the form of a dried product on the film, and thus the excess portion is wiped by a paper towel or a cloth moistened with an organic solvent and/or a dry paper towel or cloth, thereby to obtain a base member on which the water slidable film has been formed.

The water slidability in the first and second features of the invention is the one evaluated by the method as described in the evaluation method of examples. Onto the sample surface, 50 µl of pure water is added dropwise, and then the sample is gradually tilted. Thus, the tilt angle at the point when a water droplet starts moving is measured. Thus, the evaluation is carried out. Incidentally, assuming that the tilt angle is the fall angle (°), the fall angle was measured by means of CA-A model manufactured by KYOWA INTERFACE SCIENCE Co., Ltd., in the air (about 25°C).

### [Examples]

In the following, examples relating to the first feature of the invention will be described. Incidentally, the first feature of the invention is not limited to these examples. An evaluation method of the water slidable film will be shown below.

[Evaluation method of water slidable film]

(1) Contact angle
The angle formed between a water droplet and the sample surface when about 2 µl of pure water was placed on the sample surface having a water slidable film was measured by a contact angle meter. Incidentally, the measurements were carried out in the air (about 25°C) by using CA-X model manufactured by KYOWA INTERFACE SCIENCE Co., Ltd., as the contact angle meter,

(2) Fall angle
With a sample kept horizontally, 50 µl of pure water was added dropwise on the sample surface, and then the sample was gradually tilted. Thus, the tilt angle at the point when the water droplet started moving was taken as the fall angle (°). Incidentally, the fall angle was measured by means of CA-A model manufactured by KYOWA INTERFACE SCIENCE Co., Ltd., in the air (about 25°C). The one having the initial performance of the fall angle of 20° or less was rated as being acceptable in terms of the index of the water slidability (expressed as BB in Table 1 or 2), and the one of 18° or less was rated as being particularly excellent (expressed as AA in Table 1 or 2). Incidentally, the one of more than 20° was rated as being unacceptable, and expressed as CC in Table 1 or 2.

(3) Removability of excess portion
After applying the treatment agent and then air drying it, the excess portion remaining visually in white spots was wiped by a paper towel (trade name: KIM TOWEL) moistened with isopropyl alcohol to prepare a transparent sample (front window of an ordinary-sized car). The time required for obtaining the transparent sample in this step was measured. The one that had required an excess portion removal time (wiping time) of 6 minutes or less was rated as being acceptable (expressed as BB in Table 1 or 2). Further, the one that had required 3 minutes or less for the completion was rated as being particularly excellent in the removability of the excess portion (expressed as AA in Table 1 or 2). Incidentally, the one that had required more than 6 minutes for the removal time was rated as being unacceptable, and expressed as CC in Table 1.

(4) Muddy water abrasion resistance (ceria abrasion resistance)
With a cotton cloth moistened with a ceria suspension (10 wt%) obtained by dispersing a glass abrasive, MIREK A (T) (manufactured by Mitsui Mining & Smelting Co., Ltd.), in tap water, the sample surface was rubbed at an intensity of about 1.5 kg/cm². The number of rubbing cycles (reciprocation) until 70 % of the rubbed area became hydrophilic was evaluated. Herein, the sample which had required 40 cycles or more was rated as being acceptable (expressed as BB in Table 1 or 2); 50 cycles or more was as good (expressed as AA in Table 1 or 2); and 60 cycles or more was as excellent (expressed as AA+ in Table 1 or 2). Incidentally, the one of less than 40 cycles was rated as being unacceptable, and expressed as CC in Table 1 or 2.

(5) Light resistance
The contact angle (°) after the sample had been irradiated with an intense UV light from a metal halide lamp for 2 hours under the following conditions was measured and evaluated. Herein, the sample which had shown a contact angle of a water droplet after the test of 70° or more was rated as being acceptable (expressed as BB in Table 1); 80° or more was as good (expressed as AA in Table 1 or 2); and 100° or more was as excellent (expressed as AA+ in Table 1 or 2). Incidentally, the one of less than 70° was rated as being unacceptable, and expressed as CC in Table 1.

· Lamp: M015-L312 manufactured by EYEGRAPHICS Co., Ltd.
· Lamp intensity: 1.5 kW
· Illuminance: 128 mW/cm² in terms of the measured value under the following conditions
· Measuring device: UV intensity meter (UM-10, manufactured by Minolta Co., Ltd.)
· Light-receptive unit: UM-360
   (Received light wavelength region; 310 to 400 nm, Peak wavelength; 365 ± 5 nm)
· Measurement mode: irradiance measurement

The base member covered with a water slidable film treated with the treatment agent of the invention is often used outdoors, and often exposed to the sunlight. Further, dust tends to be deposited thereon. Therefore, upon wiping by a cloth for cleaning, lifting up and down of glass in use for vehicular glass, or wiper wiping, the surface is rubbed by dry or water-containing dust. In view of such respects, it is important for making the life of the film longer to improve the light resistance and the muddy water abrasion resistance.

### Example 1

### (1) Preparation of treatment agent

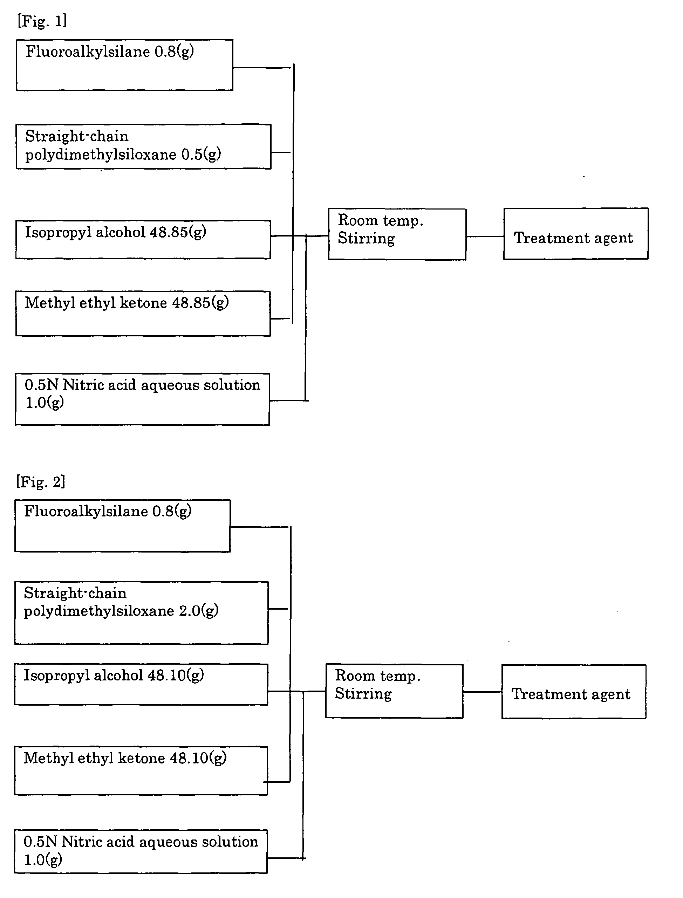

A treatment agent was obtained by adding an acidic solution to a mixture obtained by mixing a straight-chain polydimethylsiloxane with a fluoroalkylsilane and then by stirring. FIG. 1 shows the preparation procedure of the treatment agent, and the mixing ratio (weight ratio) of each chemical solution. The conditions for manufacturing of the sample and the evaluation results of the resulting product are shown in Table 1.

First, 0.50g of a both-end trialkoxy-type straight-chain polydimethylsiloxane having 250 dimethylsiloxane units [(CH₃O)₃SiCH₂CH₂{Si(CH₃)₂O}₂₅₀Si(CH₃)₂CH₂CH₂Si(OCH₃)₃], 48.85g of methyl ethyl ketone, 0.80g of a fluoroalkylsilane having 8 fluorocarbon units [CF₃(CF₂)₇CH₂CH₂i(OCH₃)₃], and 48.85g of isopropyl alcohol were mixed together, and stirred for about 5 minutes. Then, 1.0g of a 0.5 N nitric acid aqueous solution were added thereto, and stirring was conducted at room temperature for about 2 hours. The process described above provided a treatment agent in which the weight concentration of the mixed straight-chain polydimethylsiloxane (which is hereinafter described as "polydimethylsiloxane concentration") was 0.5 wt% based on the total amount of the treatment agent, and the weight concentration of the mixed fluoroalkylsilane (which is hereinafter described as " fluoroalkylsilane concentration") was 0.8 wt% based on the total amount of the treatment agent.

(2) Washing of glass substrate
The surface of a 300 mm × 300 mm × 2 mm thick sized float glass or a front window of an ordinary-sized car was rubbed using an abrasive solution, washed with water, and dried. Incidentally, as the abrasive solution herein used, a 2 wt% ceria suspension obtained by mixing a glass abrasive, MIREK A (T) (manufactured by Mitsui Mining & Smelting Co., Ltd.), with water was used.

(3) Formation of water slidable film
1.0ml (300 mm × 300 mm × 2 mm thick size) or 10 ml (front window) of the treatment agent prepared in the item (1) was added dropwise on a glass substrate, sufficiently spread over the entire surface of the glass with a cotton cloth (trade name; BEMCOT), and then air dried for about 5 minutes. Thereafter, the excess portion remaining visually in white spots were wiped by a paper towel moistened with isopropyl alcohol to obtain a transparent sample.

Evaluations were carried out in the manner described in the [Evaluation method of water slidable film]. As a result, as shown in Table 1, the removability of the excess portion was very good. Further, the initial fall angle was 18°, indicative of a good water droplet falling property. In the ceria abrasion test, 50 reciprocations were necessary for making 70% hydrophilic. Further, in the light resistance test, the contact angle after 2-hour irradiation was as high as 85°, indicative of an excellent durability.

[Table 1]

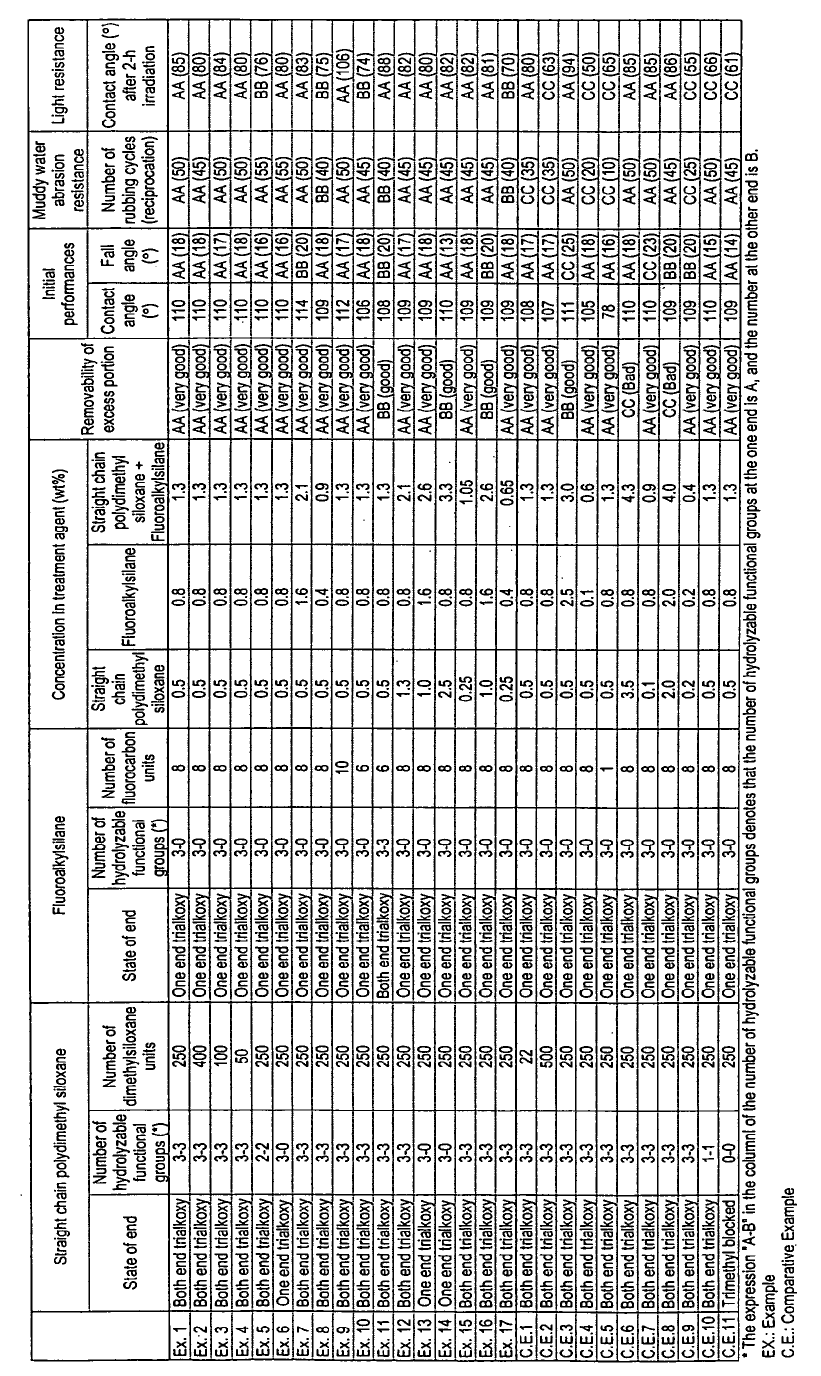

### Example 2

Entirely the same procedure as in Example 1 was carried out, except for using a both-end trialkoxy-type straight-chain polydimethylsiloxane having 400 dimethylsiloxane units, [(CH₃O)₃SiCH₂CH₂{Si(CH₃)₂O}₄₀₀Si(CH₃)₂CH₂CH₂Si(OCH₃)₃].

As a result, the physical properties were as shown in Table 1, and the removability of the excess portion was very good. Further, the initial fall angle was 18°, indicative of a good water droplet falling property. In the ceria abrasion test, 45 reciprocation cycles were necessary for making 70% hydrophilic. Further, in the light resistance test, the contact angle after 2-hour irradiation was as high as 80°, indicative of an excellent durability.

### Example 3

Entirely the same procedure as in Example 1 was carried out, except for using a both-end trialkoxy-type straight-chain polydimethylsiloxane having 100 dimethylsiloxane units, [(CH₃O)₃SiCH₂CH₂{Si(CH₃)₂O}₁₀₀Si(CH₃)₂CH₂CH₂Si(OCH₃)₃].

As a result, the physical properties were as shown in Table 1, and the removability of the excess portion was very good. Further, the initial fall angle was 17°, indicative of a good water droplet falling property. In the ceria abrasion test, 50 reciprocation cycles were necessary for making 70% hydrophilic. Further, in the light resistance test, the contact angle after 2-hour irradiation was as high as 84°, indicative of an excellent durability.

### Example 4

Entirely the same procedure as in Example 1 was carried out, except for using a both-end trialkoxy-type straight-chain polydimethylsiloxane having 50 dimethylsiloxane units,

[(CH₃O)₃SiCH₂CH₂{Si(CH₃)₂O}₅₀Si(CH₃)₂CH₂CH₂Si(OCH₃)₃].

As a result, the physical properties were as shown in Table 1, and the removability of the excess portion was very good. Further, the initial fall angle was 18°, indicative of a good water droplet falling property. In the ceria abrasion test, 50 reciprocation cycles were necessary for making 70% hydrophilic. Further, in the light resistance test, the contact angle after the test was as high as 80°, indicative of an excellent durability.

### Example 5

Entirely the same procedure as in Example 1 was carried out, except for using a both-end dialkoxy-type straight-chain polydimethylsiloxane having 250 dimethylsiloxane units,

[(CH₃O)₂(H₃C)SiCH₂CH₂{Si(CH₃)₂O}₂₅₀Si(CH₃)₂CH₂CH₂Si(CH₃)(OCH₃)₂].

As a result, the physical properties were as shown in Table 1, and the removability of the excess portion was very good. Further, the initial fall angle was 16°, indicative of a good water droplet falling property. In the ceria abrasion test, 50 reciprocation cycles were necessary for making 70% hydrophilic, indicative of an excellent durability. Further, in the light resistance test, the contact angle after 2-hour irradiation was 76°.

### Example 6

Entirely the same procedure as in Example 1 was carried out, except for using a one-end trialkoxy-type straight-chain polydimethylsiloxane having 250 dimethylsiloxane units, [(CH₃)₃SiO{Si(CH₃)₂O}₂₅₀Si(CH₃)₂CH₂CH₂Si(OCH₃)₃] .

As a result, the physical properties were as shown in Table 1, and the removability of the excess portion was very good. Further, the initial fall angle was 16°, indicative of a good water droplet falling property. In the ceria abrasion test, 50 reciprocation cycles were necessary for making 70% hydrophilic. Further, in the light resistance test, the contact angle after 2-hour irradiation was as high as 80°, indicative of an excellent durability.

### Example 7

Entirely the same procedure as in Example 1 was carried out, except that the fluoroalkylsilane concentration was set at 1.6 wt%.

As a result, the physical properties were as shown in Table 1, and the removability of the excess portion was very good. The initial fall angle was 20°. In the ceria abrasion test, 55 reciprocation cycles were necessary for making 70% hydrophilic. Further, in the light resistance test, the contact angle after the test was as high as 83°, indicative of an excellent durability.

### Example 8

Entirely the same procedure as in Example 1 was carried out, except that the fluoroalkylsilane concentration was set at 0.4 wt%.

As a result, the physical properties were as shown in Table 1, and the removability of the excess portion was very good. Further, the initial fall angle was 18°, indicative of a good water droplet falling property. Still further, in the ceria abrasion test, 40 reciprocation cycles were necessary for making 70% hydrophilic. Further, in the light resistance test, the contact angle after 2-hour irradiation was 75°.

### Example 9

Entirely the same procedure as in Example 1 was carried out, except for using a fluoroalkylsilane having 10 fluorocarbon units,

[CF₃(CF₂)₉CH₂CH₂Si(OCH₃)₃].

As a result, the physical properties were as shown in Table 1, and the removability of the excess portion was very good. Further, the initial fall angle was 17°, indicative of a good water droplet falling property. In the ceria abrasion test, 50 reciprocation cycles were necessary for making 70% hydrophilic. Further, in the light resistance test, the contact angle after 2-hour irradiation was as high as 106°, indicative of an excellent durability.

### Example 10

Entirely the same procedure as in Example 1 was carried out, except for using a fluoroalkylsilane having 6 fluorocarbon units,

[CF₃(CF₂)₅CH₂CH₂Si(OCH₃)₃].

As a result, the physical properties were as shown in Table 1, and the removability of the excess portion was very good. The initial fall angle was 18° In the ceria abrasion test, 45 reciprocation cycles were necessary for making 70% hydrophilic, indicative of an excellent durability. Further, in the light resistance test, the contact angle after 2-hour irradiation was 74°.

### Example 11

Entirely the same procedure as in Example 1 was carried out, except for using a both-end trialkoxy-type fluoroalkylsilane having 6 fluorocarbon units, [(CH₃O)₃SiCH₂CH₂(CF₂)₆CH₂CH₂Si(OCH₃)₃].

As a result, the physical properties were as shown in Table 1, and the removability of the excess portion was very good. The initial fall angle was 20°. In the ceria abrasion test, 40 reciprocation cycles were necessary for making 70% hydrophilic. Further, in the light resistance test, the contact angle after 2-hour irradiation was as high as 88°, indicative of an excellent durability.

### Example 12

Entirely the same procedure as in Example 1 was carried out, except that the polydimethylsiloxane concentration was set at 1.3 wt%.

As a result, the physical properties were as shown in Table 1, and the removability of the excess portion was very good. Further, the initial fall angle was 17°, indicative of a good water droplet falling property. In the ceria abrasion test, 45 reciprocation cycles were necessary for making 70% hydrophilic. Further, in the light resistance test, the contact angle after 2-hour irradiation was as high as 82°, indicative of an excellent durability.

### Example 13

Entirely the same procedure as in Example 6 was carried out, except that the polydimethylsiloxane concentration was set at 1.0 wt%, and the fluoroalkylsilane concentration was set at 1.6 wt%, i.e., the total amount of the straight-chain polydimethylsiloxane and the fluoroalkylsilane was set at 2.6 wt% based on the total amount of the treatment agent.

As a result, the physical properties were as shown in Table 1, and the removability of the excess portion was very good. Further, the initial fall angle was 18°, indicative of a good water droplet falling property. In the ceria abrasion test, 45 reciprocation cycles were necessary for making 70% hydrophilic. Further, in the light resistance test, the contact angle after 2-hour irradiation was as high as 80°, indicative of an excellent durability.

### Example 14

Entirely the same procedure as in Example 6 was carried out, except that the polydimethylsiloxane concentration was set at 2.5 wt%.

As a result, the physical properties were good as shown in Table 1. Further, the initial fall angle was 13°, indicative of a good water droplet falling property. In the ceria abrasion test, 45 reciprocation cycles were necessary for making 70% hydrophilic. Further, in the light resistance test, the contact angle after 2-hour irradiation was as high as 82°, indicative of an excellent durability.

### Example 15

Entirely the same procedure as in Example 1 was carried out, except that the polydimethylsiloxane concentration was set at 0.25 wt%.

As a result, the physical properties were as shown in Table 1, and the removability of the excess portion was very good. Further, the initial fall angle was 18°, indicative of a good water droplet falling property. In the ceria abrasion test, 45 reciprocation cycles were necessary for making 70% hydrophilic. Further, in the light resistance test, the contact angle after 2-hour irradiation was as high as 82°, indicative of excellent durability.

### Example 16

Entirely the same procedure as in Example 1 was carried out, except that the polydimethylsiloxane concentration was set at 1.0 wt%, and the fluoroalkylsilane concentration was set at 1.6 wt%, i.e., the total amount of the straight-chain polydimethylsiloxane and the fluoroalkylsilane was set at 2.6 wt% based on the total amount of the treatment agent.

As a result, the physical properties were good as shown in Table 1. Further, the initial fall angle was 20°. In the ceria abrasion test, 45 reciprocation cycles were necessary for making 70% hydrophilic. Further, in the light resistance test, the contact angle after the test was as high as 81°, indicative of an excellent durability.

### Example 17

Entirely the same procedure as in Example 1 was carried out, except that the polydimethylsiloxane concentration was set at 0.25 wt%, and the fluoroalkylsilane concentration was set at 0.4 wt%, i.e., the total amount of the straight-chain polydimethylsiloxane and fluoroalkylsilane was set at 0.65 wt% based on the total amount of the treatment agent.

As a result, the physical properties were as shown in Table 1, and the removability of the excess portion was very good. Further, the initial fall angle was 18°, indicative of a good water droplet falling property. Still further, in the ceria abrasion test, 40 reciprocation cycles were necessary for making 70% hydrophilic. Further, in the light resistance test, the contact angle after 2-hour irradiation was 70°.

### Example 18

The same procedure as in Example 1 was carried out, except for using the one having a primer layer formed on a base member. A method for forming the primer layer on the base member will be described in the following. 0.2 g of tetraisocyanate silane [Si(NCO)₄, manufactured by Matsumoto Chemical Industry Co., Ltd.] was mixed with 20 g of ethyl acetate [CH₃COOC₂H₅] to obtain a solution containing tetraisocyanate silane added in an amount of 1.0 wt%. A cotton cloth (trade name; BEMCOT) was moistened with the solution. With the cotton cloth, the ceria rubbed glass base member was wiped so as not to result in double coating. Thereafter, it was dried at room temperature for about 5 minutes, and then subjected to a heat treatment at 180°C in a furnace for 13 minutes (sheet temperature upon removal from the furnace: 150°C), thereby obtaining a glass base member having a primer layer of a silica film formed thereon.

Then, the coating and wiping of the treatment agent were immediately carried out in the same manner as in Example 1, thereby to obtain a transparent sample. Evaluations were carried out in the manner described in the [Evaluation method of highly water slidable film]. As a result, as shown in Table 1, the removability of the excess portion was good. Further, the initial fall angle was 20°, indicative of a good water droplet falling property. In the ceria abrasion test, 70 reciprocation cycles were necessary for making 70% hydrophilic. Further, in the light resistance test, the contact angle after 2-hour irradiation was as high as 108°, indicative of an excellent durability. Table 2 shows the conditions for manufacturing of each sample formed using a base member having a primer layer formed thereon, and Table 1 shows the evaluation results of the resulting product.
[Table 2]

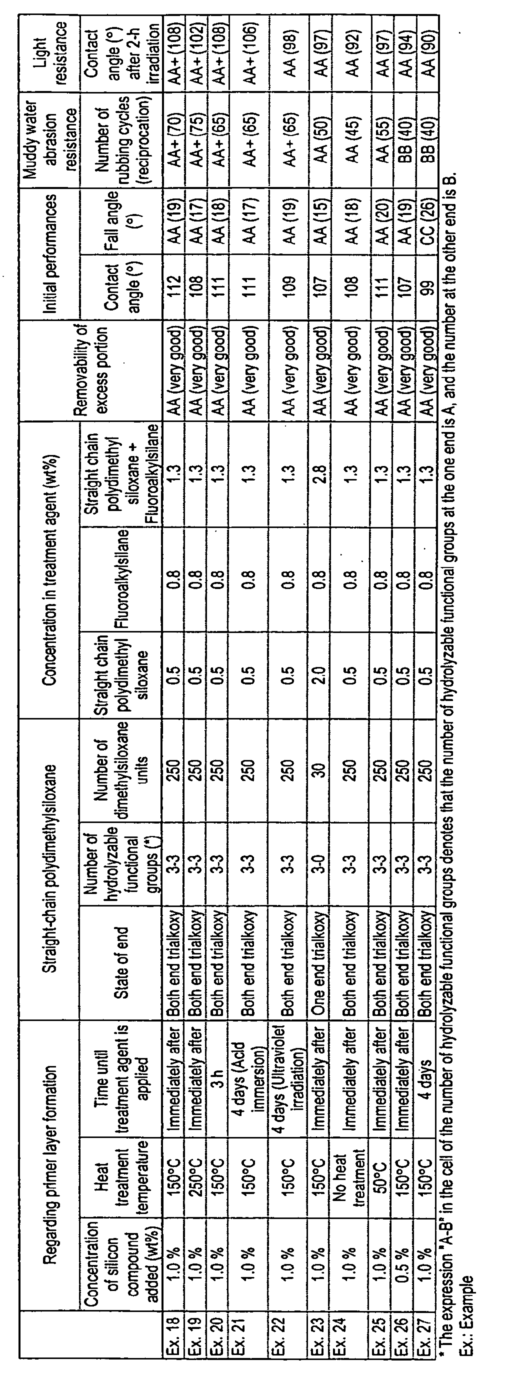

### Example 19

The same procedure as in Example 18 was carried out, except that the heat treatment for obtaining a primer layer was carried out at 300°C for 13 minutes (sheet temperature upon removal from the furnace: 250°C). As a result, the initial fall angle was 17°, indicative of a good water droplet falling property. In the ceria abrasion test, 75 reciprocation cycles were necessary for making 70% hydrophilic. Further, in the light resistance test, the contact angle after 2-hour irradiation was as high as 102°, indicative of an excellent durability.

### Example 20

A primer layer was formed, and then allowed to stand in the air for 3 hours. Except for this, the same procedure as in Example 18 was carried out. As a result, the initial fall angle was 18°, indicative of a good water droplet falling property. In the ceria abrasion test, 65 reciprocation cycles were necessary for making 70% hydrophilic. Further, in the light resistance test, the contact angle after 2-hour irradiation was as high as 108°, indicative of an excellent durability.

### Example 21

A primer layer was formed, and then allowed to stand in the air for 4 days. Thereafter, a base member was immersed in a 0.5 N nitric acid for 2 hours. Except for this, the same procedure as in Example 18 was carried out. As a result, in the ceria abrasion test, 65 reciprocation cycles were necessary for making 70% hydrophilic. Further, in the light resistance test, the contact angle after 2-hour irradiation was as high as 106°, indicative of an excellent durability.

### Example 22

A primer layer was formed, and then allowed to stand in the air for 4 days. Thereafter, ultraviolet irradiation was carried out by means of a corona discharging device. Except for this, the same procedure as in Example 18 was carried out. As a result, in the ceria abrasion test, 65 reciprocation cycles were necessary for making 70% hydrophilic. Further, in the light resistance test, the contact angle after 2-hour irradiation was as high as 98°, indicative of an excellent durability.

### Example 23

The same procedure as in Example 18 was carried out, except for using a one-end trialkoxy-type straight-chain polydimethylsiloxane having 30 dimethylsiloxane units,
[(H₃C)₃SiCH₂CH₂{Si(CH₃)₂)₃O}₃₀Si(CH₃)₂CH₂CH₂Si(CH₃)(OCH₃)₂]. As a result, the fall angle showed a very good value of 15°, and in the ceria abrasion test, 50 reciprocation cycles were necessary for making 70% hydrophilic. Further, in the light resistance test, the contact angle after 2-hour irradiation was as high as 97°, indicative of an excellent durability.

### Example 24

The same procedure as in Example 18 was carried out, except that the heat treatment after the application of the solution for obtaining the primer layer was not carried out. As a result, in the ceria abrasion test, the number of reciprocation cycles until 70 % became hydrophilic was 45, which was almost the same as in Example 1 and the like, in which no primer layer was formed.

### Example 25

The same procedure as in Example 18 was carried out, except that the heat treatment after the primer coating was carried out at 70°C for 13 minutes (sheet temperature upon removal from the furnace 50°C). As a result, in the ceria abrasion test, the number of reciprocation cycles until 70 % became hydrophilic was 55.

### Example 26

The same procedure as in Example 18 was carried out, except that the amount of tetraisocyanate silane added was 0.5 wt% in the coating solution for obtaining the primer layer. As a result, in the ceria abrasion test, the number of reciprocation cycles until 70 % became hydrophilic was 40.

### Example 27

A primer layer was formed, and then allowed to stand in the air for 4 days. Except for this, the same procedure as in Example 18 was carried out. As a result, in the ceria abrasion test, 50 reciprocation cycles were necessary for making 70% hydrophilic. Further, in the light resistance test, the contact angle after 2-hour irradiation was 90°.

### Comparative Example 1

Entirely the same procedure as in Example 1 was carried out, except for using a both-end trialkoxy-type straight-chain polydimethylsiloxane having 22 dimethylsiloxane units,

[(CH₃O)₃SiCH₂CH₂{Si(CH₃)₂O}₂₂Si(CH₃)₂CH₂CH₂Si(OCH₃)₃].

As a result, the physical properties were as shown in Table 1, and in the ceria abrasion test, 35 reciprocation cycles made 70 % hydrophilic, indicative of a low durability.

### Comparative Example 2

Entirely the same procedure as in Example 1 was carried out, except for using a both-end trialkoxy-type straight-chain polydimethylsiloxane having 500 dimethylsiloxane units, [(CH₃O)₃SiCH₂CH₂{Si(CH₃)₂O}₅₀₀Si(CH₃)₂CH₂CH₂Si(OCH₃)₃].

As a result, the physical properties were as shown in Table 1, and in the ceria abrasion test, 35 reciprocation cycles made 70 % hydrophilic.
Further, in the light resistance test, the contact angle after 2-hour irradiation was 63°, indicative of a low durability.

### Comparative Example 3

Entirely the same procedure as in Example 1 was carried out, except that the fluoroalkylsilane concentration was set at 2.5 wt%.

As a result, the physical properties were as shown in Table 1, and the initial fall angle was 25°, indicative of a low water droplet falling property.

### Comparative Example 4

Entirely the same procedure as in Example 1 was carried out, except that the fluoroalkylsilane concentration was set at 0.1 wt%.

As a result, the physical properties were as shown in Table 1, and in the ceria abrasion test, 20 reciprocation cycles made 70 % hydrophilic. Further, in the light resistance test, the contact angle after 2-hour irradiation was 50°, indicative of a low durability.

### Comparative Example 5

Entirely the same procedure as in Example 1 was carried out, except for using a fluoroalkylsilane having 1 fluorocarbon unit, [CF₃CH₂CH₂Si(OCH₃)₃].

As a result, the physical properties were as shown in Table 1, and in the ceria abrasion test, 10 reciprocation cycles made 70 % hydrophilic. Further, in the light resistance test, the contact angle after 2-hour irradiation was 65°, indicative of a low durability.

### Comparative Example 6

Entirely the same procedure as in Example 1 was carried out, except that the polydimethylsiloxane concentration was set at 3.5 wt%.

As a result, the physical properties were as shown in Table 1, and the removability of the excess portion was bad. Thus, it was not possible to obtain a transparent one with ease.

### Comparative Example 7

Entirely the same procedure as in Example 1 was carried out, except that the polydimethylsiloxane concentration was set at 0.1 wt%.

As a result, the physical properties were as shown in Table 1, and the initial fall angle was 23°, indicative of a low water droplet falling property.

### Comparative Example 8

Entirely the same procedure as in Example 1 was carried out, except that the polydimethylsiloxane concentration was set at 2.0 wt%, and the fluoroalkylsilane concentration was set at 2.0 wt%, i.e., the total amount of the straight-chain polydimethylsiloxane and the fluoroalkylsilane was set at 4.0 wt% based on the total amount of the treatment agent.

As a result, the physical properties were as shown in Table 1, and the removability of the excess portion was bad. Thus, it was not possible to obtain a transparent one with ease.

### Comparative Example 9

Entirely the same procedure as in Example 1 was carried out, except that the polydimethylsiloxane concentration was set at 0.2 wt%, and the fluoroalkylsilane concentration was set at 0.2 wt%, i.e., the total amount of the straight-chain polydimethylsiloxane and the fluoroalkylsilane was set at 0.4 wt% based on the total amount of the treatment agent.

As a result, the physical properties were as shown in Table 1, and in the ceria abrasion test, 25 reciprocation cycles made 70% hydrophilic. Further, in the light resistance test, the contact angle after 2-hour irradiation was 55°, indicative of a low durability.

### Comparative Example 10

Entirely the same procedure as in Example 1 was carried out, except for using a both-end monoalkoxy-type straight-chain polydimethylsiloxane having 250 dimethylsiloxane units [CH₃O{Si(CH₃)₂O}₂₅₀Si(CH₃)₂OCH₃].

As a result, the physical properties were as shown in Table 1, and in the light resistance test, the contact angle after 2-hour irradiation was 66°, indicative of a low durability.

### Comparative Example 11

Entirely the same procedure as in Example 1 was carried out, except for using a trimethyl-blocked-type straight-chain polydimethylsiloxane having 250 dimethylsiloxane units, [CH₃{Si(CH₃)₂O}₂₅₀Si(CH₃)₃].

As a result, the physical properties were as shown in Table 1, and in the light resistance test, the contact angle after 2-hour irradiation was 61°, indicative of a low durability.

In the following, the second feature of the invention will be described in details. For simplification, it is omitted that each is specified as the second feature.

The solidification due to the second feature of the invention described in the SUMMARY OF THE INVENTION means that the applied treatment agent is dried to chemically bond the primer layer with the straight-chain polydimethylsiloxane or the fluoroalkylsilane.

The straight-chain polydimethylsiloxane is the one for mainly imparting the water slidability to an article, and the difference in chemical species largely affects the characteristics of the article. An object of the invention is to provide an article which has such water slidability as to reduce the detriment to the visibility through the article even in an environment in which the article is in contact with water when the water slidable article is applied to the windowpanes, side glasses, and the like for vehicles, i.e., which article has such a water slidability as to provide a fall angle of 15° or less.

The hydrolysable group at the end portion is provided for the improvement of the durability of the article, because other chemical species, in the case of the invention, the silanol group formed on the primer layer and the straight-chain polydimethylsiloxane are chemically bonded. Then, the hydrolysable groups at the end portion are allowed to be only at one side of the straight-chain polydimethylsiloxane. The number of the hydrolysable functional groups is set to be at least 2, and in view of adhesion between the film and the primer layer, it is preferably set to be 3 to 9, and further it is more preferably set to be 4 to 9.

When the average number of repeating units of the dimethylsiloxane units (Si(CH₃)₂O) is set to be 20 to 50 (1.3 to 1.7 in common logarithm), it becomes possible to easily obtain a water slidable article that is high in durabilities such as muddy water abrasion resistance and light resistance and that has a fall angle of 15° or less.

A treatment agent obtained by mixing the straight-chain polydimethylsiloxane, a fluoroalkylsilane having hydrolysable functional groups and 1 to 12 fluorocarbon units (CF₂ or CF₃), and a solution having an organic solvent, an acid, and water is applied to the primer layer having silanol groups formed thereon and solidified, thereby to form a film. As a result, it is possible to obtain a water slidable article excellent in water slidability, water repellency, muddy water abrasion resistance, and light resistance.

The fluoroalkylsilane is the one that contributes to the improvement of the water repellency and the muddy water abrasion resistance of the film. This has hydrolysable functional groups, so that there is established a chemical bond with the silanol groups formed on the primer layer or with the straight-chain polydimethylsiloxane.

As the fluoroalkylsilane, the one having hydrolysable functional groups and further having a perfluoroalkyl group (CF₃(CF₂)ₜ₋₁-) or perfluoroalkylene group (-(CF₂)ᵤ-) having 1 to 12 fluorocarbon units (CF₂ or CF₃) in the molecule is used. An increase in number of fluorocarbon units (CF₂ or CF₃) results in an increase in light resistance and muddy water abrasion resistance of the resulting water slidable article. Herein, the t and u each denote integers.

However, when the number of fluorocarbon units increases, the freezing point of the fluoroalkylsilane increases to room temperature or higher. Therefore, the treatment agent containing the fluoroalkylsilane unfavorably becomes difficult in application. Therefore, in order to improve the light resistance and the muddy water abrasion resistance of the resulting film, to facilitate the application of the treatment agent to the base member, and further to facilitate the removal of the components which have not formed the film, i.e., the excess portion, from the film after drying, the number of fluorocarbon units is set to be 1 to 12, preferably 6 to 12 for improving the muddy water abrasion property of the film.

Durabilities such as muddy water abrasion resistance and light resistance of a water slidable article are also affected by the adhesion between the base member and the film. In the invention, a solution containing a silicon compound having 4 functional groups added therein is applied to the base member, so that the silicon compound and the base member are bonded together and silanol groups derived from the silicon compound are formed. Therefore, it is possible to increase the number of silanol groups than the base member. Therefore, it is possible to increase the number of bonding sites of the straight-chain polydimethylsiloxane and the fluoroalkylsilane. As a result, the adhesion between the film and the base member is improved, which allows the improvements of the muddy water abrasion resistance and the light resistance of the water slidable article.

In view of the fact that the number of silanol groups is increased by the silicon compound, it is preferable to decrease the thickness of the primer layer, and a monomolecular layer resulting in [base member -Si-OH; in this case, -Si-OH is the primer layer, and the remaining Si bonding hands become -OH groups, or form -O-Si-bonds] to 10-nm thick layer is preferable. In view of the number of silanol groups to be formed, it is preferable that the primer layer is a monomolecular layer.

In the formation of the primer layer, the bonding between the silicon compound and the base member may be carried out at room temperature of 10°C to 40°C, or in an environment close to room temperature after the application of the solution to the base member. However, in order to shorten the bonding time, the formation of the primer layer may be carried out by heating at 50°C to 350°C. By carrying out the heating, the bonding time is shortened, which makes the surface of the primer layer to be less susceptible to external contamination, lint, and moisture. This facilitates the formation of silanol groups and thus is preferable.

It is preferable that the silicon compound having 4 functional groups for the formation of the primer layer is tetraisocyanate silane. The chemical species is high in reactivity, and hence it is capable of forming siloxane bonds with the silanol groups on the base member with reliability.

In order to obtain a water slidable article excellent in muddy water abrasion resistance, the number of hydrolysable functional groups of the straight-chain polydimethylsiloxane is preferably set to be 4 to 9 so that the number of bonds with the silanol groups of the primer layer can be increased.

Then, the straight-chain polydimethylsiloxane preferably has the following structural formula. 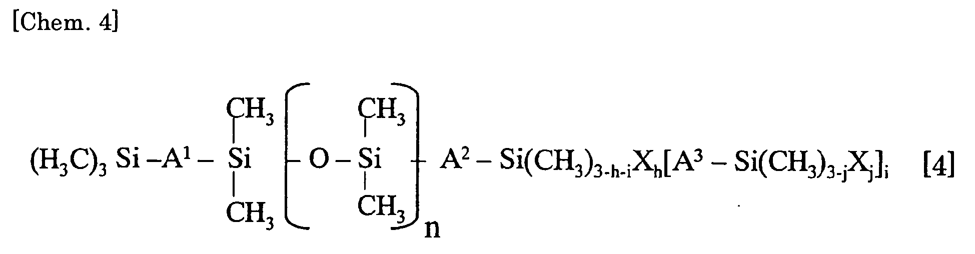 where A¹, A², and A³ are each divalent hydrocarbon groups, or -(CH₂)ᵢ-NH-CO-O- groups (i is an integer of 0 to 9), or oxygens; n denotes the average repetition number of dimethylsiloxane units; X denotes a hydrolysable functional group, h and i each denote integers of 0 to 3, and j is an integer of 1 to 3, provided that when i is 0, h is 2 or 3, and the sum of h and i is an integer of 3 or less. For example, when i and j are each 3, it becomes possible to provide 9 hydrolysable functional groups at the one-side end of the straight-chain dimethylsiloxane.

The manufacturing method of a water slidable article by the foregoing process can easily provide a water slidable article which has such water slidability as to reduce the detriment to the visibility through the article even in an environment in which the article is in contact with water, and which is excellent in muddy water abrasion resistance and light resistance, and provides the water slidable article excellent in the foregoing various performances at a low cost.

With the manufacturing method of the water slidable article of the second feature of the invention, it is easy to form a water slidable film. The resulting article has excellent water slidability, and produces effects of excellent durabilities such as muddy water abrasion resistance and light resistance.

The method for manufacturing a water slidable article of the invention is characterized by including: a step of applying a solution containing a silicon compound having 4 functional groups added therein to the base member, thereby bonding the silicon compound with the base member and forming a primer layer including silanol groups derived from the silicon compound formed thereon; and a step of applying a treatment agent containing a straight-chain polydimethylsiloxane having at least 3 hydrolysable functional groups only at one-side end and having an average number of repeating units of dimethylsiloxane units (Si(CH₃)₂O) of 20 to 50 (1.3 to 1.7 in common logarithm), a fluoroalkylsilane having hydrolysable functional groups, and 1 to 12 fluorocarbon units (CF₂ or CF₃), and a solution having an organic solvent, an acid, and water to the primer layer, and solidifying it, and thereby forming a water slidable film.

As the silicon compound having 4 functional groups, it is possible to use tetraisocyanate silane, silane tetrahalide, tetramethoxysilane, tetraethoxysilane, and the like. Out of these, it is preferable to use tetraisocyanate silane and silane tetrahalide, which are high in hydrolysis rate, and particularly tetraisocyanate silane.

The chemical species is added to a solvent to prepare a solution to be applied to the base member surface. As the solvent, it is possible to use alcohols, for example, lower alcohols such as methyl alcohol, ethyl alcohol, propyl alcohol, and isopropyl alcohol; acetones such as acetone and methyl ethyl ketone; ethers such as ethyl ether and ethyl acetate; esters, or common organic solvents of paraffinic hydrocarbons or aromatic hydrocarbons, for example, n-hexane, toluene, or chlorobenzene, or mixtures thereof.

In order to adjust the pH of the solution to 0 to 5, an acid such as hydrochloric acid, nitric acid, or acetic acid may be introduced. In order to accelerate the hydrolysis reaction of the chemical species, a small amount of water may be introduced. In order to efficiently form the primer layer, it is preferable to add the chemical species in an amount of 0.5 wt% to 2 wt%, preferably 0.7 wt% to 1.5 wt%, and more preferably 0.9 wt% to 1.2 wt%, based on the amount of the solvent, to prepare the solution.

As a method for applying the coating solution to the glass base member surface, it is possible to use a known means such as hand coating, brush coating, a spray coating method, a bar coating method, or a roll coating method. These methods are each small in number of steps, and high in productivity. In view of the ease of formation of the primer layer, the ease of preparation of the solution, the number of silanol groups formed, and the like, it is preferable to use tetraisocyanate silane for the chemical species.

In order to speed up the bonding between the base member and the primer layer, it is preferable to conduct a baking at 50°C to 350°C, and preferably at 100°C to 300°C, after the solution is applied to the base member. Then, immediately after the formation of the primer layer, the treatment agent of the invention may be applied to form a water slidable film. In case that the treatment agent of the invention is applied to the base member after the base member, on which the primer layer has been formed, is subjected to storage, distribution or the like, the silanol groups on the primer layer may be destroyed or deactivated under the influences of the organic substances, moisture present in the air, and the like. Therefore, it is preferable to reactivate the silanol groups through the contact of an acidic solution with the deactivated primer layer, ultraviolet irradiation thereof, or the like, and to render the primer layer in the active state again.

As the hydrolysable functional group of the straight-chain dimethylsiloxane or the fluoroalky silane, it is possible to use an alkoxy group such as methoxy group, ethoxy group, propoxy group, isopropoxy group, or butoxy group, a chloro group or an isocyanate group, or the like. However, when the reactivity of the hydrolysable functional group is too high, not only handling for the preparation of the treatment agent becomes difficult, but also the pot life of the treatment agent is shortened. On the other hand, when the reactivity is too low, the hydrolysis reaction does not proceed sufficiently, and the amount of the resulting silanol groups becomes insufficient. Therefore, the bonding between the primer layer and the film becomes insufficient. In view of the ease of handling, the pot life of the treatment agent, and the durability of the resulting water slidable film, the hydrolysable functional group is preferably an alkoxy group. Above all, methoxy group and ethoxy group are particularly preferable.

As the fluoroalkylsilane, it is preferable to use a fluoroalkylsilane having a hydrolysable functional group at the one-side end, which is represented by the following general formula [2], or a fluoroalkylsilane having hydrolysable functional groups at the ends of both sides, which is represented by the following general formula [3].

[Chem.5] CF₃(CF₂)ₘ₋₁CH₂CH₂Si(CH₃)₃₋ₚY¹ₚ [2]

where Y¹ is a monovalent hydrolysable functional group. Further, m is an integer of 1 to 12, and denotes the number of fluorocarbon units (CF₂ or CF₃). Further, p denotes an integer of 1 to 3, and denotes the number of hydrolysable functional groups.

[Chem. 6] **Y²_{q}(CH₃)_{3-q}SiCH₂CH₂(CF₂)ₘCH₂CH₂Si(CH₃)₃₋ᵣY³ᵣ** **[3]**

where Y² and Y³ are each monovalent hydrolysable functional groups. Further, m is an integer of 1 to 12, and denotes the number of fluorocarbon units. Further, q and r each denote integers of 1 to 3.

As the fluoroalkylsilane, it is possible to use those exemplified in the first feature of the invention as the fluoroalkylsilane having a hydrolysable functional group at the one-side end.

Further, it is possible to use those exemplified in the first feature of the invention as the fluoroalkylsilane having hydrolysable functional groups at the ends of both sides, too.

However, for a fluoroalkylsilane having hydrolysable functional groups at the ends of both sides, condensation tends to proceed because it has hydrolysable functional groups at the ends of both sides. For this reason, the application of the treatment agent tends to become difficult. Further, when it becomes an excess portion not to be bonded to the base member after having become a film, it is firmly fixed to the article in the form of a condensed excess portion. Thus, the removal of the excess portion after drying may become difficult. In view of this respect, a fluoroalkylsilane having a hydrolysable functional group only at the end of one side is preferable.

In the treatment agent for obtaining the water slidable film, in terms of the weight concentration based on the total amount of the treatment agent, the straight-chain polydimethylsiloxane is introduced in an amount of 0.2 wt% to 3.0 wt%, preferably 0.5 wt% to 2.5 wt%, and more preferably 1.5 wt% to 2.5 wt%; the fluoroalkylsilane in an amount of 0.2 wt% to 2.0 wt%, and preferably 0.5 wt% to 1.0 wt%; and further the total amount of the straight-chain polydimethylsiloxane and the fluoroalkylsilane in an amount of 0.4 wt% to 3.5 wt%, preferably 1.0 wt% to 3.5 wt%, and more preferably 2.0 wt% to 3.5 wt%.

The treatment agent is obtained by additionally mixing an organic solvent, an acid, and water. As the organic solvent, it is possible to use an organic solvent for dissolving functional components, i.e., the straight-chain polydimethylsiloxane, the fluoroalkylsilane, water, and an acid. As these, it is preferable to use lower alcohols such as ethyl alcohol and isopropyl alcohol, ketones such as methyl ethyl ketone and methyl isobutyl ketone, esters such as ethyl acetate and butyl acetate, hydrocarbon solvents such as hexane, toluene, benzene, and xylene, ethers such as diethyl ether and diisopropyl ether, and mixtures thereof. Above all, it is particularly preferable to use mixed solvents of at least one solvent selected from methyl ethyl ketone, ethyl acetate, hexane, diethyl ether and diisopropyl ether and a lower alcohol such as ethyl alcohol and isopropyl alcohol, because they are high in solubility for the straight-chain polydimethylsiloxane, the fluoroalkylsilane, water and acid, and further make the coatability of the treatment agent proper.

The water for use in the treatment agent of the invention is preferably one time to 100 times, in terms of the number of molecules, the number of the hydrolysable functional groups possessed by the straight-chain polydimethylsiloxane and the fluoroalkylsilane. At less than one time, the hydrolysis reaction does not proceed sufficiently, so that silanol groups are less likely to be formed. This unfavorably results in the reduction of the durability of the resulting water slidable film. At more than 100 times, the straight-chain polydimethylsiloxane, the fluoroalkylsilane, and water unfavorably become less likely to be uniformly dissolved in the treatment agent.

The acid for use in the treatment agent carries out a catalytic function to accelerate the hydrolysis reaction of the functional components, i.e., the straight-chain polydimethylsiloxane and the fluoroalkyl silane. It is possible to use nitric acid, hydrochloric acid, acetic acid, sulfuric acid, other organic acids, and the like. It is mixed so that the pH value in a form mixed with water is 0 to 5, and preferably 0 to 2. In such an acidic region, when the used acid is a strong acid, the reaction rate of the functional components, i.e., the straight-chain polydimethylsiloxane and the fluoroalkylsilane, increases. As a result, the pot life of the treatment agent becomes short. On the other hand, when it is a weak acid, the hydrolysis of the functional components, i.e., the straight-chain polydimethylsiloxane and the fluoroalkylsilane, unfavorably does not proceed sufficiently.

The base member for use in the method for manufacturing the water slidable article of the invention has no particular restriction. It is possible to use those exemplified in the first feature of the invention.

### [Examples]

In the following, examples relating to the second feature of the invention will be described. Incidentally, the evaluation methods of the water slidable article will be shown in the following.

### [Evaluation method of water slidable film]

(1) Contact angle
The measurement was carried out in the same manner as in the first feature of the invention.

(2) Fall angle
The measurement was carried out in the same manner as in the first feature of the invention.

(3) Muddy water abrasion resistance (ceria abradability)
Rubbing was carried out in the same manner as in the first feature of the invention. The number of rubbing cycles (reciprocation) until 70 % of the rubbed area became hydrophilic was evaluated. In this test, when the number was 40 or more, the sample was rated as being practically durable; 40 or less, as an acceptable product; and 45 cycles or more, as a good product.

(4) Light resistance
After the sample had been irradiated with an intense UV light from a metal halide lamp for 2 hours under the following conditions, the contact angle (°) was measured and evaluated. After irradiation, the one that had shown a contact angle of 95° or more was rated as being excellent in durability. This light resistance test was carried out under the same conditions as in the weather resistance test in the first feature of the invention.

The water slidable article according to the second feature of the invention is often used outdoors, and often exposed to the sunlight. Further, dust also tends to be deposited thereon. Therefore, upon wiping by a cloth for cleaning, lifting up and down of glass in use for glass for an automobile, or wiper wiping, the surface is also often rubbed by dry or water-containing dust. In view of such respects, the light resistance and the muddy water abrasion resistance are important indexes in consideration of the practical utilization of the water slidable article.

### Example 1

### [Preparation of treatment agent]

A treatment agent was obtained by adding an acidic solution to a mixture obtained by mixing the straight-chain polydimethylsiloxane with the fluoroalkylsilane, followed by stirring. FIG. 2 shows the preparation procedure of the treatment agent, and the mixing ratio (weight ratio) of each chemical solution.

First, 2.00g of a straight-chain polydimethylsiloxane having 30 (1.5 in common logarithm) dimethylsiloxane units and having 9 methoxy groups only at the end of one side through a branched structure, [(CH₃O)₃SiCH₂CH₂{Si(CH₃)₂O}₃₀Si(CH₃)₂CH₂CH₂Si{CH₂CH₂Si(OCH₃)₃}₃]; 48.10g of methyl ethyl ketone; 0.80g of a fluoroalkylsilane having 8 fluorocarbon units [CF₃(CF₂)₇CH₂CH₂i(OCH₃)₃]; and 48.10g of isopropyl alcohol were mixed together, followed by stirring for about 5 minutes. Then, 1.0g of 0.5 N nitric acid aqueous solution was added thereto, followed by stirring at room temperature for about 2 hours. The process described above provided a treatment agent in which the weight concentration of the mixed straight-chain polydimethylsiloxane (which is hereinafter described as "polydimethylsiloxane concentration") was 2.0 wt% based on the total amount of the treatment agent, and the weight concentration of the mixed fluoroalkylsilane (which is hereinafter described as " fluoroalkylsilane concentration") was 0.8 wt% based on the total amount of the treatment agent.

### [Cleaning of glass substrate]

A 300 mm x 300 mm x 2 mm thick sized float glass was rubbed with an abrasive solution, washed with water, and dried. Incidentally, as the abrasive solution herein, a 2 wt% ceria suspension obtained by mixing a glass abrasive, MIREK A (T) (manufactured by Mitsui Mining & Smelting Co., Ltd.) with water was used.

### [Formation of primer layer]

0.2 g of tetraisocyanate silane [Si(NCO)₄] were mixed with 19.8 g of ethyl acetate [CH₃COOC₂H₅] to obtain a solution containing tetraisocyanate silane added therein in an amount of 1.0 wt%. A cotton cloth (trade name; BEMCOT, manufactured by Asahi Kasei Textile Corporation) was moistened with the solution. With the cotton cloth, the coating was carried out on the top of the ceria rubbed glass base member so as not to result in a double coating. Thereafter, drying was carried out at room temperature for about 5 minutes, and then heating was carried out at 180°C in a furnace for 13 minutes (sheet temperature upon removal from the furnace: 150°C), thereby obtaining a glass base member having a primer layer formed thereon.

### [Formation of water slidable film]

1.0 ml of the treatment agent prepared in the item (1) (300 mm x 300 mm x 2 mm thick size) was added dropwise on the glass base member having the primer layer formed thereon, sufficiently spread over the entire surface of the glass with a cotton cloth (trade name; BEMCOT), followed by air drying for about 5 minutes. Thereafter, the excess portion remaining visually in white spots was wiped by a paper towel moistened with isopropyl alcohol, thereby obtaining a transparent sample.

Evaluations were carried out in the manner described in the [Evaluation method of water slidable film]. As a result, as shown in Table 3, the sample was a good product that showed a contact angle of 110°, and a fall angle of 15°, indicative of a good water droplet falling property and that required 45 reciprocation cycles for making 70 % hydrophilic in the ceria abrasion test. Further, in the light resistance test, the contact angle after 2-hour irradiation was as high as 105°, indicative of an excellent durability.

**[Table 3]**

| | Primer layer | Polydimethylsiloxane | | Initial contact angle (°) | Initial fall angle (°) | Muddy water abrasion test (reciprocation) | Light resistance test (°) |
|---|---|---|---|---|---|---|---|
| | | Degree of polymerization (expressed in common logarithm) | Number of reactive groups at each end * | | | | |
| Example 1 | Included | 30 (1.5) | 0-9 | 110 | 15 | 45 | 105 |
| Example 2 | Included | 30 (1.5) | 0-2 | 110 | 15 | 50 | 97 |
| Comparative Example 1 | None | 30 (1.5) | 0-9 | 110 | 13 3 | 35 | 70 |
| Comparative Example 2 | None | 30 (1.5) | 0-2 | 109 | 12 | 30 | 78 |
| Comparative Example 3 | Included | 250 (2.4) | 3-3 | 112 | 19 | 70 | 108 |

| | | | | | | | |
|---|---|---|---|---|---|---|---|
| * For the number of reactive groups, the expression "A-B" denotes that the number of reactive groups at the one end is A, and further, the number of the reactive groups at the other end is B. | | | | | | | |

### Example 2

A water slidable article was obtained in the same manner as in Example 1, except for using a one-end trialkoxy-type straight-chain polydimethylsiloxane having 30 (1.5 in common logarithm) dimethylsiloxane units [(H₃C)₃SiCH₂CH₂{Si(CH₃)₂O}₃₀Si(CH₃)₂CH₂CH₂Si(CH₃)(OCH₃)₂] as the straight-chain polydimethylsiloxane. As a result, as shown in Table 3, the sample was a good product that showed a fall angle of 15°, i.e., a very good value, and that required 50 reciprocation cycles for making 70 % hydrophilic in the ceria abrasion test. Further, in the light resistance test, the contact angle after 2-hour irradiation was as high as 97°, also indicative of an excellent durability.

### Comparative Example 1

A water slidable article was obtained in the same manner as in Example 1, except that a primer layer was not formed. As a result, as shown in Table 3, the contact angle was 110°, and the fall angle was 13°. However, in the ceria abrasion test, 35 reciprocation cycles were necessary for making 70% hydrophilic, and in the light resistance test the contact angle after 2-hour irradiation was 70°, indicative of an inferior durability.

### Comparative Example 2

A water slidable article was obtained in the same manner as in Example 2, except that a primer layer was not formed. As a result, as shown in Table 3, the contact angle was 109°, and the fall angle was 12°. However, in the ceria abrasion test, 30 reciprocation cycles were necessary for making 70% hydrophilic, and in the light resistance test the contact angle after 2-hour irradiation was 78°, indicative of an inferior durability.

### Comparative Example 3

A water slidable article was obtained in the same manner as in Example 1, except for using a both-end trialkoxy-type straight-chain polydimethylsiloxane having 250 (2.4 in common logarithm) dimethylsiloxane units [(CH₃O)₃SiCH₂CH₂{Si(CH₃)₂O}₂₅₀Si(CH₃)₂CH₂CH₂Si(OCH₃)₃] as the straight-chain polydimethylsiloxane. As a result, as shown in Table 3, the contact angle was 112°. In the ceria abrasion test, 70 reciprocation cycles were necessary for making 70% hydrophilic, and in the light resistance test the contact angle after 2-hour irradiation was 108°. However, the fall angle was as large as 19°.

In the case of forming a primer layer on the base member in the foregoing method for manufacturing a water slidable film in accordance with the first or second feature of the invention, a treatment selected from the group of the contact with an acidic solution of a pH of 0 to 4, the corona discharge, and the ultraviolet irradiation may be conducted on the primer layer after the formation of the primer layer. In the following, this treatment is referred to as a primer layer treatment.

By conducting any of the foregoing treatments on the primer layer in this primer layer treatment, it is possible to render the primer layer in the state in which silanol groups are surely present thereon, i.e., in an active state. Even if the number of the silanol groups decreases due to that the primer layer is affected by the adsorption of methane or carbonic acid gas in the air, or by water, lint or the like, the primer layer is reactivated by conducting any of the foregoing treatments after the formation of the primer layer and before the formation of the water slidable film.

The primer layer can be rendered in an active state at any time by the primer layer treatment. This allows the stable formation of a water slidable film on the base member with high adhesion. This greatly contributes to the stable production of water slidable articles. In view of that a water slidable film is formed after the primer layer is turn into an active state, it is preferable to carry out the foregoing treatment immediately before the formation of the water slidable film.

To conduct the above treatment even if the primer layer is in whatever state contributes to the leveling out of the production of the water slidable articles. However, it is preferable to carry out the treatment only when the silanol groups on the primer layer have been destroyed, i.e., when the primer layer has been deactivated.

For the production of common water slidable articles, the manufacturing method is carried out by the process in which the treatment is not conducted. It is preferable that the treatment is carried out only on the ones in which the primer layer has been deactivated under the influences of the adsorption of methane or carbonic acid gas, or water in the air, lint or the like. This allows the reduction of the loss of the base member, and enables the improvement of the production efficiency.

The primer layer treatment can achieve the state in which silanol groups on the primer layer surface are always present. This allows the stable formation of a water slidable film on the base member with high adhesion. This greatly contributes to the stable production of water slidable articles.

The primer layer can be obtained, for example, by applying a solution containing a silicon compound having 4 functional groups added therein to a base member, thereby bonding the silicon compound with the base member and forming silanol groups derived from the silicon compound.

In view of the fact that the number of silanol groups is increased by the silicon compound, it is preferable to decrease the thickness of the primer layer. Furthermore, it is preferable to have a monomolecular layer resulting in [base member -Si-OH; in this case, -Si-OH is the primer layer, and the remaining Si bonding hands become -OH groups, or form -O-Si-bonds] to 10-nm thick layer. In view of the number of silanol groups to be formed, it is preferable that the primer layer is a monomolecular layer.

In the formation of the primer layer, the bonding between the silicon compound and the base member may be carried out at room temperature of 10°C to 40°C or in an environment close to room temperature, after the application of the solution to the base member. However, in order to shorten the bonding time, it is optional to carry out the formation of the primer layer by heating at 50°C to 350°C. By carrying out the heating, the bonding time is shortened. Furthermore, the surface of the primer layer is made to be less susceptible to influences of contamination from outside, adsorption of methane and carbon dioxide, lint, and moisture. This preferably facilitates the formation of silanol groups.

As the silicon compound having 4 functional groups, it is possible to use tetraisocyanate silane, silane tetrahalide, tetramethoxysilane, tetraethoxysilane, and the like. Out of these, it is preferable to use tetraisocyanate silane and silane tetrahalide, which are high in hydrolysis rate, and particularly tetraisocyanate silane. This is because tetraisocyanate silane is excellent in the ease of formation of the primer layer, the ease of preparation of the solution, the number of silanol groups formed, and the like.

The chemical species is added to a solvent to prepare a solution to be applied to the base member surface. As the solvent, it is possible to use the solvents exemplified in the second feature of the invention.

In order to adjust the pH of the solution to 0 to 5, an acid such as hydrochloric acid, nitric acid, or acetic acid may be introduced. In order to accelerate the hydrolysis reaction of the chemical species, a small amount of water may be introduced. In order to efficiently form the primer layer, it is preferable that the chemical species is added in an amount of 0.5 wt% to 2 wt%, preferably 0.7 wt% to 1.5 wt%, and more preferably 0.9 wt% to 1.2 wt%, based on the amount of the solvent, to prepare the solution.

As a method for applying the coating solution to the glass base member surface, it is possible to use a known means such as hand coating, brush coating, a spray coating method, a bar coating method, a roll coating method, a dip coating method, or a spin coating method. These methods are each small in the number of steps and high in productivity.

In order to speed up the bonding between the base member and the primer layer, it is preferable to conduct a baking at 50°C to 350°C and preferably at 100°C to 300°C, after the solution is applied to the base member.

In order to ensure the formation of the silanol groups on the primer layer, a treatment selected from the group of the contact with an acidic solution of a pH of 0 to 4, the ultraviolet irradiation, and the corona discharge is conducted against the primer layer, before the formation of the water slidable film.

It is possible to conduct the contact with an acidic solution of a pH of 0 to 4 by means such as immersion of the base member having a primer layer formed thereon in the acidic solution. As the acid used herein, hydrochloric acid, sulfuric acid, nitric acid, or the like is used. In order to ensure the state in which silanol groups are present on the primer layer, the pH value of the acidic solution must be set at 0 to 4. It is preferable to set the contact time at 1 minute to 2 hours. After the contact, it is preferable to wash the base member or the primer layer with water or the like.

It is possible to carry out the ultraviolet irradiation by means such as direct irradiation of the base member having a primer layer formed thereon with ultraviolet light at an intensity of 0.01 W to 1 W. As the light source used herein, a metal halide lamp, a mercury lamp, or the like is used. In order to activate the silanol groups on the primer layer, it is desirable to set the irradiation time at 3 seconds to 30 minutes. After ultraviolet irradiation, it is also possible to wash the base member or the primer layer with water or the like.

It is possible to carry out the corona discharge by means such as discharge in such a manner as to interpose the base member having a primer layer formed thereon, between a grounded wire and an electrode. The output of the oscillator used herein is desirably 0.1 kW to 4 kW. Whereas, in order to activate the silanol groups on the primer layer, the treatment time is preferably about 1 second to 10 seconds.

The treatment selected from the group of the contact with an acidic solution with a pH of 0 to 4, the corona discharge, and the ultraviolet irradiation can also reactivate the silanol groups, even when the silanol groups have been destroyed, i.e., the primer layer has been deactivated. Therefore, it can make the primer layer active again, even if the primer layer is deactivated by the adsorption of methane or carbon dioxide in the air, or water, lint or the like. Therefore, it achieves effects of reducing the waste of the base member and the like.

The water slidable film formed by the method for manufacturing a water slidable article of the invention undergoes a condensation reaction with the silanol groups on the primer layer upon film formation, and it is firmly bonded to the base member via the primer layer.

### [Examples]

In the following, a description will be given to examples in which the primer layer treatment of the invention was carried out. In the present examples, a water repellent film was formed on a primer layer. By evaluating the characteristics of this water repellent film, the activity of the primer layer was judged.

### [Evaluation method of water repellent film]

(1) Contact angle
The water slidable article having a water repellent film was subjected to a measurement in the same manner as in the first feature of the invention.

(2) Muddy water abrasion resistance (ceria abradability)
Rubbing was carried out in the same manner as in the first feature of the invention. The number of rubbing cycles (reciprocation) until 70 % of the rubbed area became hydrophilic was evaluated. In this test, the sample that had required 60 cycles or more was rated as the article excellent in durability.

(3) Light resistance
After the sample was irradiated with an intense UV light from a metal halide lamp for 2 hours under the following conditions, the contact angle (°) was measured and evaluated. This light resistance test was carried out under the same conditions as those of the weather resistance test in the first feature of the invention. In this test, the sample that had kept a contact angle of 95° or more after the test was rated as the article excellent in light resistance.

### Example 1

### 1. Washing of glass base member

The glass substrate was washed in the same manner as the method in the second feature of the invention.

2. Formation of primer layer
A glass base member having a primer layer formed thereon was obtained in the same manner as the method in the second feature of the invention.

3. Reactivation of primer layer
The glass base member having a primer layer formed thereon was allowed to stand in the air in a laboratory for 4 days, so that the primer layer was deactivated. Thereafter, the primer layer was reactivated by an immersion in a 0.5 N nitric acid aqueous solution for 1 hour.

4. Preparation of a coating solution for obtaining a water repellent film
A coating solution was obtained by adding an acidic solution to a mixture obtained by mixing a straight-chain polydimethylsiloxane with a fluoroalkylsilane and by stirring.
First, 0.50g of a straight-chain polydimethylsiloxane which has alkoxy groups on both ends and 250 dimethylsiloxane units, [(CH₃O)₃SiCH₂CH₂{Si(CH₃)₂O}₂₅₀Si(CH₃)₂CH₂CH₂Si(OCH₃)₃]; 48.85g of methyl ethyl ketone; 0.80g of a fluoroalkylsilane having 8 fluorocarbon units [CF₃(CF₂)₇CH₂CH₂i(O CH₃)₃] and 48.85g of isopropyl alcohol were mixed together, followed by stirring for about 5 minutes. Then, 1.0g of a 0.5 N nitric acid aqueous solution was added, followed by stirring at room temperature for about 2 hours. A coating solution was obtained by the above process.

5. Formation of water repellent film
1.0ml of the coating solution prepared above was added dropwise on the reactivated primer layer and sufficiently spread over the entire glass surface by a cotton cloth (trade name; BEMCOT, manufactured by Asahi Kasei Textile Corporation), followed by air drying for about 5 minutes.

Thereafter, the visually observable excess portion remaining in white spots was wiped by a paper towel moistened with isopropyl alcohol to obtain a transparent sample.

Evaluations were carried out in the manner described in the [Evaluation method of water repellent film]. The results are shown in Table 4. The contact angle was 111°, indicative of a good water repellency. In the ceria abrasion test, 65 reciprocation cycles were necessary for making 70% hydrophilic. Further, in the light resistance test, the contact angle after 2-hour irradiation was as high as 106°, indicative of an excellent durability.

**[Table 4]**

| | Elapsed time after primer layer formation | Reactivation method of primer layer | Initial water droplet contact angle of water repellent film | Ceria abradability test evaluation | Light resistance test evaluation |
|---|---|---|---|---|---|
| Example 1 | 4 days | Acid immersion | 111° | 65 cycles | 106° |
| Example 2 | 4 days | Corona discharge | 108° | 65 cycles | 98° |
| Example 3 | 4 days | Ultraviolet irradiation | 106° | 65 cycles | 97° |
| Comparative Example 1 | 10 minutes | None | 109° | 70 cycles | 100° |
| Comparative Example 2 | 4 days | None | 99° | 45 cycles | 90° |

### Example 2

The same procedure as in Example 1 was carried out, except for using a corona discharge as the method for reactivating the primer layer. In the corona discharge, a corona discharge treatment machine manufactured by Think Engineering Co., Ltd., was used. The corona output power was set at 0.4 kw; and the distance between a wire and the glass surface was set at 2 to 2.5 mm. 300 x 300 mm was irradiated by spending 20 minutes. Evaluations were carried out in the manner described in the [Evaluation method of water repellent film]. As a result, the contact angle was 108°, indicative of a good water repellency. In the ceria abrasion test, 65 reciprocation cycles were necessary for making 70% hydrophilic. Further, in the light resistance test, the contact angle after 2-hour irradiation was as high as 98°, indicative of an excellent durability.

### Example 3

The same procedure as in Example 1 was carried out, except for using an ultraviolet irradiation as the method for reactivating the primer layer. As the light source, a mercury lamp was used, and it was irradiated with an ultraviolet light by spending 25 minutes with an intensity of 128 mW at a time when it reaches the primer layer. Evaluations were carried out in the manner described in the [Evaluation method of water repellent film]. As a result, the contact angle was 106°, indicative of a good water repellency. In the ceria abrasion test, 65 reciprocation cycles were necessary for making 70% hydrophilic. Further, in the light resistance test, the contact angle after 2-hour irradiation was as high as 97°, indicative of an excellent durability.

### Comparative Example 1

The same procedure as in Example 1 was carried out, except that the standing after the formation of the primer layer and the reactivation of the primer layer were not conducted. Namely, the comparative example is an example showing a conventional method in which a water slidable film is immediately formed after the formation of the primer layer. Evaluations were carried out in the manner described in the [Evaluation method of water repellent film]. As a result, the contact angle was 109°. In the ceria abrasion test, 70 reciprocation cycles were necessary for making 70% hydrophilic. Further, in the light resistance test, the contact angle after 2-hour irradiation was 100°.

### Comparative Example 2

The same procedure as in Example 1 was carried out, except that the primer layer was not reactivated. Evaluations were carried out in the manner described in the [Evaluation method of water repellent film]. As a result, the contact angle was 99°, which was less than 100°. In the ceria abrasion test, 45 reciprocation cycles were necessary for making 70% hydrophilic. Further, in the light resistance test, the contact angle after 2-hour irradiation was 90°, indicative of an inferior durability.

## Claims

1. A treatment agent obtained by mixing a straight-chain polydimethylsiloxane having two or three of hydrolysable functional groups at at least one end and having 30-400 of dimethylsiloxane units (Si(CH₃)₂O), a fluoroalkylsilane having a hydrolysable functional group and having 6-12 of fluorocarbon units (CF₂ or CF₃), and a solution containing an organic solvent, an acid and water, the treatment agent for obtaining a water slidable film being **characterized in that**, based on the total amount of the treatment agent, in terms of weight concentration, 0.2-3.0 wt% of the straight-chain polydimethylsiloxane, 0.2-2.0wt% of the fluoroalkylsilane, and 0.5-3.5wt% of the total amount of the straight-chain polydimethylsiloxane and the fluoroalkylsilane are mixed together.

2. A treatment agent for obtaining a water slidable film as claimed in claim 1, which is **characterized in that** the straight-chain polydimethylsiloxane has the hydrolysable functional groups at only an end of one side.

3. A treatment agent for obtaining a water slidable film as claimed in claim 2, which is **characterized in that**, based on the total amount of the treatment agent, in terms of weight concentration, 0.5-2.5wt% of the straight-chain polydimethylsiloxane, 0.6-1.6wt% of the fluoroalkylsilane, and 1.2-3.0wt% of the total amount of the straight-chain polydimethylsiloxane and the fluoroalkylsilane are mixed together.

4. A treatment agent for obtaining a water slidable film as claimed in claim 1, which is **characterized in that** the straight-chain polydimethylsiloxane has the hydrolysable functional groups at ends of both sides.

5. A treatment agent for obtaining a water slidable film as claimed in claim 4, which is **characterized in that**, based on the total amount of the treatment agent, in terms of weight concentration, 0.2-2.0wt% of the straight-chain polydimethylsiloxane, 0.5-1.4wt% of the fluoroalkylsilane, and 0.8-2.5wt% of the total amount of the straight-chain polydimethylsiloxane and the fluoroalkylsilane are mixed together.

6. A treatment agent for obtaining a water slidable film as claimed in any of claims 1 to 5, which is **characterized in that** the hydrolysable functional group is an alkoxy group.

7. A process for producing a water slidable film, comprising the steps of:
applying a treatment agent according to any of claims 1 to 6 to a base member;
drying the base member coated with the treatment agent; and
removing the unreacted or hydrolyzed or condensed chain-chain polydimethylsiloxane and fluoroalkylsilane, which are in a free state.

8. A process for producing a water slidable film as claimed in claim 7, which is **characterized in that** a solution containing a silicon compound having four functional groups is applied to the base member and solidified, thereby forming a primer layer derived from the silicon compound.

9. A process for producing a water slidable film as claimed in claim 8, which is **characterized in that** the silicon compound having four functional groups is tetraisocyanate silane.

10. A process for producing a water slidable article having a water slidable film formed on a base member, comprising:
applying a solution containing a silicon compound having four functional groups to a base member, thereby bonding the silicon compound with the base member and forming a primer layer where silanol groups derived from the silicon compound are formed; and
applying a treatment agent to the primer layer to solidify it, thereby forming a water slidable film, the treatment agent being obtained by mixing a straight-chain polydimethylsiloxane having at least two of hydrolysable groups at only one end and being 20-50 (1.3-1.7 in common logarithm) in average number of repeating units of dimethylsiloxane units (Si(CH₃)₂O), a fluoroalkylsilane having a hydrolysable functional group and being 1-12 in number of fluorocarbon units (CF₂ or CF₃), and a solution containing an organic solvent, an acid and water.

11. A process for producing a water slidable article as claimed in claim 10, which is **characterized in that** the solution containing the silicon compound having four functional groups is applied to the base member, followed by heating at 50°C to 350°C, thereby forming the primer layer.

12. A process for producing a water slidable article as claimed in claim 10 or claim 11, which is **characterized in that** the silicon compound having four functional groups is tetraisocyanate silane.

13. A process for producing a water slidable article as claimed in any of claim 10 to claim 12, which is **characterized in that** the straight-chain polydimethyl siloxane has 4 to 9 of hydrolysable functional groups.

14. A process for producing a water slidable article as claimed in any of claim 10 to claim 13, which is **characterized in that** the straight-chain polydimethylsiloxane has a structure represented by the following formula: 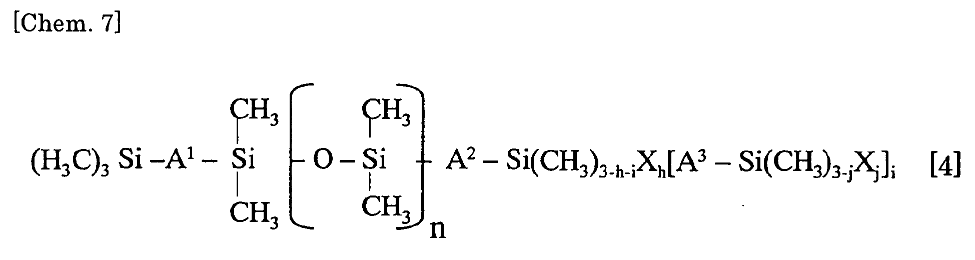 where A¹, A², and A³ are each divalent hydrocarbon groups, or -(CH₂)ᵢ-NH-CO-O- groups (i is an integer of 0 to 9), or oxygens; n denotes average repetition number of dimethylsiloxane units; X denotes a hydrolysable functional group, h and i each denote integers of 0 to 3, and j is an integer of 1 to 3, provided that when i is 0, h is 2 or 3, and the sum of h and i is an integer of 3 or less.

15. A process for producing a water slidable article as claimed in any of claim 8 to claim 14, in which the primer layer is formed on the base member and a bonding with the water slidable film is achieved by silanol groups that are formed on a surface of the primer layer, the process being **characterized in that**, after the primer layer is formed, the primer layer is subjected to a treatment selected from the group consisting of a contact of an acidic solution of a pH of 0 to 4, a corona discharge, and an ultraviolet irradiation.
